# EUROPEAN PATENT SPECIFICATION

(11) **EP 3 481 097 B1**
(45) Date of publication and mention of the grant of the patent: **01.09.2021**
(21) Application number: 17849136.1
(22) Date of filing: 08.09.2017
(51) Int. Cl.: H04W 28/06, H04W 16/28, H04L 27/26, H04B 7/06, H04L 5/00, H04W 84/12

(54) **METHOD FOR TRANSMITTING OR RECEIVING SIGNAL IN WIRELESS LAN SYSTEM AND APPARATUS THEREFOR**
VERFAHREN ZUM SENDEN ODER EMPFANGEN VON SIGNALEN IN EINEM DRAHTLOSEN LAN-SYSTEM UND VORRICHTUNG DAFÜR
PROCÉDÉ D'ÉMISSION OU DE RÉCEPTION DE SIGNAL DANS UN SYSTÈME LAN SANS FIL, ET APPAREIL ASSOCIÉ

(30) Priority: 08.09.2016 US 201662384770 P; 13.09.2016 US 201662393685 P; 10.03.2017 US 201762469532 P
(43) Date of publication of application: 08.05.2019
(60) Divisional application: 21187720.4
(73) Proprietor: LG Electronics Inc., Seoul 07336 (KR)
(72) Inventor: PARK, Sungjin, Seoul 06772 (KR); KIM, Jinmin, Seoul 06772 (KR); CHO, Hangyu, Seoul 06772 (KR); CHOI, Jinsoo, Seoul 06772 (KR); JO, Kyungtae, Seoul 06772 (KR)
(74) Representative: Maikowski & Ninnemann Patentanwälte Partnerschaft mbB
(86) International application number: PCT/KR2017/009885
(87) International publication number: WO 2018/048252

(56) References cited:
- US-A1- 2015 146 812
- US-A1- 2015 311 968
- US-A1- 2016 164 800
- US-A1- 2016 164 800
- CARLOS CORDEIRO (INTEL): "Specification Framework for TGay ; 11-15-1358-05-00ay-specification-framework -for-tgay", IEEE DRAFT; 11-15-1358-05-00AY-SPECIFICATION-FRAMEWORK -FOR-TGAY, IEEE-SA MENTOR, PISCATAWAY, NJ USA , vol. 802.11ay, no. 5 17 August 2016 (2016-08-17), pages 1-26, XP068107003, Retrieved from the Internet: URL:https://mentor.ieee.org/802.11/dcn/15/ 11-15-1358-05-00ay-specification-framework -for-tgay.doc [retrieved on 2016-08-17]
- JEORGE HURTARTE (TERADYNE): "TG AY July 2016 San Diego Meeting Minutes ; 11-16-1074-00-00ay-tg-ay-july-2016-san-die go-meeting-minutes", IEEE DRAFT; 11-16-1074-00-00AY-TG-AY-JULY-2016-SAN-DIE GO-MEETING-MINUTES, IEEE-SA MENTOR, PISCATAWAY, NJ USA , vol. 802.11ay 4 August 2016 (2016-08-04), pages 1-15, XP068107452, Retrieved from the Internet: URL:https://mentor.ieee.org/802.11/dcn/16/ 11-16-1074-00-00ay-tg-ay-july-2016-san-die go-meeting-minutes.docx [retrieved on 2016-08-04]
- KASHER, ASSAF et al.: "EDMG Header Encoding and Modulation", IEEE 802.11-16/1011r1, 28 July 2016 (2016-07-28), XP068107380, Retrieved from the Internet: URL:https://mentor.ieee.org/802.11/documen ts?is_dcn= 10 1 1&is_year=2016
- KASHER, ASSAF et al.: "Channel Bonding Proposals", IEEE 802.11 -16/0098r0, 18 January 2016 (2016-01-18), XP055453975, Retrieved from the Internet: URL:https://mentor.ieee.org/802.11/documen ts?is_ dcn=0099&is _year=2016

## Description

### BACKGROUND OF THE INVENTION

### Field of the invention

The following description relates to a method of transmitting and receiving a signal of a station in a wireless local area network (WLAN) system, and more particularly to, a method and a device for the same for performing beamforming training on a plurality of channels when a station transmits and receives signals through a plurality of channels and transmitting and receiving signals based on beamforming training.

### Related Art

A standard for the wireless LAN technology is being developed as an Institute of Electrical and Electronics Engineers (IEEE) 802.11 standard. IEEE 802.11a and b use an unlicensed band in 2.4. GHz or 5 GHz. And, IEEE 802. 11b provides a transmission rate of 11 Mbps, and IEEE 802. 11a provides a transmission rate of 54 Mbps. And, IEEE 802.11g provides a transmission rate of 54 Mbps by applying orthogonal frequency-division multiplexing (OFDM). IEEE 802.11n provides a transmission rate of 300 Mbps on 4 spatial streams by applying multiple input multiple output-OFDM (MIMO-OFDM). The IEEE 802.11n supports a channel bandwidth of up to 40 MHz, and, in this case, the IEEE 802.11n provides a transmission rate of 600 Mbps.

The above-described wireless LAN (WLAN) standard was previously defined as the IEEE 802.11ac standard, which uses a maximum bandwidth of 160MHz, supports 8 spatial streams, and supports a maximum rate of 1Gbit/s. And, discussions are now being made on the IEEE 802.11ax standardization.

Meanwhile, the IEEE 802.11ad system regulates a capability enhancement for an ultrahigh speed throughput in a 60 GHz band, and, for the first time, in the above-described IEEE 802.11ad system, discussions are being made on an IEEE 802.11ay for adopting channel bonding and MIMO techniques. For example, CARLOS CORDEIRQ (INTEL): "Specification Framework for TGay; 11-15-1358-05-00ay-specification-framework-for-tgay", IEEE DRAFT; 17 August 2016, pages 1-26, relates to an IEEE 802.11ad system.

### SUMMARY OF THE INVENTION

In an 11ay system applicable to the present invention, a station may transmit and receive signals through a plurality of channels.

In this case, the subject-matter of the claims is presented and defines the present invention. The present invention provides a method and a device for the same in which the station performs beamforming training of a plurality of channels and transmits and receives signals based on beamforming training.

In an example, there is provided a method in which a first station (STA) transmits signals through a plurality of channels to a second STAin a wireless local area network (WLAN) system including transmitting a physical protocol data unit (PPDU) including an enhanced directional multi gigabit (EDMG) header A field and a training (TRN) field to the second STA in order to perform beamforming training on the plurality of channels with the second STA, wherein the EDMG header A field indicates whether the signal transmission method through the plurality of channels is channel bonding or channel aggregation, and wherein the TRN field has different structures according to/based on information indicated by the EDMG header A field; and transmitting signals through the plurality of channels to the second STA based on the beamforming training result, wherein the EDMG header A field is duplicated and transmitted through each channel included in the plurality of channels, and the TRN field is transmitted with/in a channel bonding transmission method or a channel aggregation transmission method according to/based on information indicated by the header A field.

In another example, there is provided a method in which a first station (STA) receives a signal from a second STA through a plurality of channels in a wireless local area network (WLAN) system including receiving a physical protocol data unit (PPDU) including an enhanced directional multi gigabit (EDMG) header A field and a training (TRN) field to the second STA in order to perform beamforming training on the plurality of channels with the second STA, wherein the EDMG header A field indicates whether the signal transmission method through the plurality of channels is channel bonding or channel aggregation, and wherein the TRN field has different structures according to/based on information indicated by the EDMG header A field; and receiving signals from the second STA through the plurality of channels based on the beamforming training result, wherein the EDMG header A field is duplicated and transmitted through each channel included in the plurality of channels, and the TRN field is transmitted with/in a channel bonding transmission method or a channel aggregation transmission method according to/based on information indicated by the header A field.

In another example, there is provided a station device for transmitting signals through a plurality of channels in a wireless local area network (WLAN) system including a transceiver having at least one radio frequency (RF) chain and configured to transmit and receive signals to and from another station device; and a processor connected to the transceiver to process signals transmitted and received to and from the another station device, wherein the processor is configured to transmit a physical protocol data unit (PPDU) including an enhanced directional multi gigabit (EDMG) header A field and a training (TRN) field to the another station device in order to perform beamforming training on the plurality of channels with the another station device, wherein the EDMG header A field indicates whether the signal transmission method through the plurality of channels is channel bonding or channel aggregation, and wherein the TRN field has different structures according to/based on information indicated by the EDMG header A field; and to transmit signals to the another station device through the plurality of channels based on the beamforming training result, wherein the EDMG header Afield is duplicated and transmitted through each channel included in the plurality of channels, and the TRN field is transmitted with/in a channel bonding transmission method or a channel aggregation transmission method according to/based on information indicated by the header A field.

In another example, there is provided a station device for receiving signals through a plurality of channels in a wireless local area network (WLAN) system including a transceiver having at least one radio frequency (RF) chain and configured to transmit and receive signals to and from another station device; and a processor connected to the transceiver to process signals transmitted and received to and from the another station device, wherein the processor is configured to receive a physical protocol data unit (PPDU) including an enhanced directional multi gigabit (EDMG) header A field and a training (TRN) field to the another STA device in order to perform beamforming training on the plurality of channels with the another STA device, wherein the EDMG header A field indicates whether the signal transmission method through the plurality of channels is channel bonding or channel aggregation, and wherein the TRN field has different structures according to/based on information indicated by the EDMG header A field; and to receive signals from the another station device through the plurality of channels based on the beamforming training result, wherein the EDMG header A field is duplicated and transmitted through each channel included in the plurality of channels, and the TRN field is transmitted with/in a channel bonding transmission method or a channel aggregation transmission method according to/based on information indicated by the header A field.

Here, the PPDU may be configured in an order of a legacy shot training field (L-STF), a legacy channel estimation (L-CE) field, a legacy header (L-Header) field, the EDMG header A field, a beam refinement protocol (BRP) frame, and the TRN field..

Particularly, the BRP frame may include one of a sector identity (ID) field and a count DOWN (CDOWN) field according to/based on whether a short sector sweep (SSW) frame is used in a previously performed sector level sweep (SLS) phase.

For example, when a short SSW frame is used in the previously performed SLS phase, the BRP frame may include a CDOWN field, and when a short SSW frame is not used in the previously performed SLS phase, the BRP frame may include a sector ID field.

Further, when the signal transmission method through the plurality of channels is channel bonding, the channel bonding may include two to four channel bonding.

Further, when the signal transmission method through the plurality of channels is channel aggregation, the channel aggregation may include two channel aggregation or four channel aggregation.

In this case, the PPDU may not include an EDMG-STF field, an EDMG-CE field, and an EDMG header-B field.

Further, the EDMG header A field may include a 1-bit size indicator indicating whether the signal transmission method through the plurality of channels is channel bonding or channel aggregation.

In this case, the 1-bit size indicator may be a TRN aggregation subfield.

The effect that can be obtained from the present invention is not limited to the above-described effects and the other effects will be understood by those skilled in the art from the following description.

### [Advantageous effects]

Through such a configuration, a station according to the present invention can perform beamforming training on a plurality of channels and transmit and receive signals more reliably based on beamforming training.

The effect that can be obtained from the present invention is not limited to the above-described effects and the other effects will be understood by those skilled in the art from the following description.

### BRIEF DESCRIPTION OF THE DRAWINGS

The appended drawings of this specification are presented to provide a further understanding of the present invention and are incorporated in and constitute a part of this application, illustrate embodiments of the invention and serve to explain the principle of the invention along with the description of the present invention.
FIG. 1 is a diagram showing an exemplary configuration of a wireless LAN (WLAN) system.
FIG. 2 is a diagram showing another exemplary configuration of a wireless LAN (WLAN) system.
FIG. 3 is a diagram describing a channel in a 60GHz band for describing a channel bonding operation according to an exemplary embodiment of the present invention.
FIG. 4 is a diagram describing a basic method for performing channel bonding in a wireless LAN (WLAN) system.
FIG. 5 is a diagram describing a configuration of a beacon interval.
FIG. 6 is a diagram describing a physical configuration of a legacy radio frame.
FIG. 7 and FIG. 8 are diagrams describing a configuration of a header field of the radio frame shown in FIG. 6.
FIG. 9 is a diagram showing a PPDU structure that can be applied to the present invention.
FIG. 10 is a diagram showing a simple PPDU structure that can be applied to the present invention.
FIG. 11 is a diagram illustrating an example of a beamforming training process applicable to the present invention.
FIGS. 12 and 13 are diagrams illustrating examples of a sector level sweep (SLS) phase.
FIG. 14 is a diagram simply illustrating operations of an initiator and a responder according to a BRP phase applicable to the present invention.
FIG. 15 is a diagram illustrating a PPDU format transmitted in a BRP setup subphase according to an example applicable to the present invention.
FIG. 16 is a diagram illustrating a PPDU format transmitted in an MIDC subphase according to an example applicable to the present invention.
FIG. 17 is a diagram illustrating a PPDU format transmitted in an MIDC subphase according to another example applicable to the present invention.
FIG. 18 is a diagram illustrating a PPDU format transmitted in a BRP transaction subphase according to an example applicable to the present invention.
FIG. 19 is a diagram illustrating a configuration of transmitting a BRP packet according to an example of the present invention.
FIGS. 20 and 21 are diagrams simply illustrating operations in a BRP transaction subphase of an STA according to an example of the present invention.
FIG. 22 is a diagram simply illustrating an operation in a BRP transaction subphase of an STA according to another example of the present invention.
FIG. 23 is a diagram simply illustrating a BRP packet applicable to the present invention.
FIG. 24 is a diagram simply illustrating structures of a BRP packet applicable to the present invention.
FIG. 25 is a diagram illustrating a PPDU format transmitted in a beam tracking phase according to an example applicable to the present invention.
FIG. 26 is a diagram simply illustrating an SLS phase according to a second exemplary embodiment of the present invention.
FIG. 27 is a diagram describing a device for implementing the above-described method.

### DESCRIPTION OF EXEMPLARY EMBODIMENTS

Hereinafter, the preferred embodiment of the present invention will be described in detail with reference to the appended drawings. The detailed description that will hereinafter be disclosed along with the appended drawings will only be provided to describe an exemplary embodiment of the present invention. And, therefore, it should be understood that the exemplary embodiment presented herein will not represent the only embodiment for carrying out the present invention.

The following detailed description includes specific details for providing a full understanding of the present invention. However, it will be apparent to anyone skilled in the art that the present invention can be carried out without referring to the above-mentioned specific details. In some cases, in order to avoid any ambiguity in the concept of the present invention, the disclosed structure and device may be omitted, or the disclosed structure and device may be illustrated as a block diagram based on their core functions.

Although diverse mobile communication systems applying the present invention may exist, a wireless LAN (WLAN) system will hereinafter be described in detail as an example of such mobile communication system.

### 1. Wireless LAN (WLAN) System

### 1-1. General wireless LAN (WLAN) system

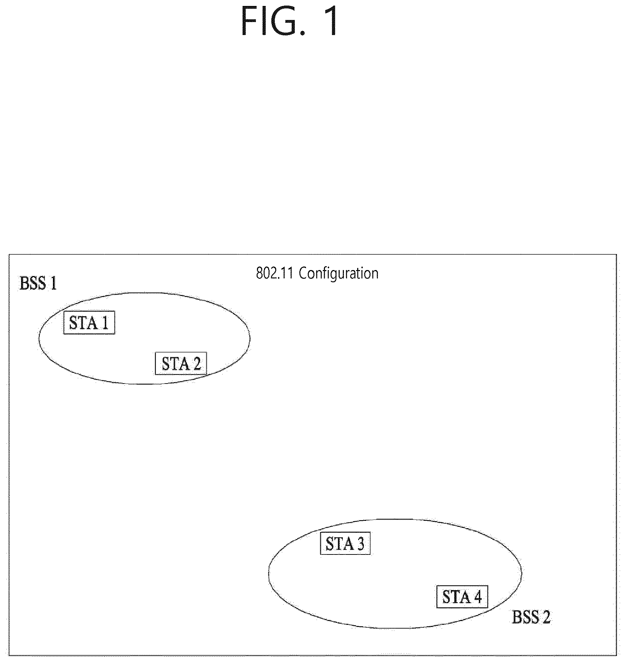

FIG. 1 is a diagram showing an exemplary configuration of a wireless LAN (WLAN) system.

As shown in FIG. 1, a wireless LAN (WLAN) includes one or more Basic Service Set (BSS). A BSS is a set (or group) of stations (STAs) that successfully achieve synchronization so as to communication with one another.

As a logical entity including a Medium Access Control (MAC) and a Physical Layer interface for a wireless medium, an STA includes an access point (AP) and a non-AP Station. Among the STAs, a portable device (or terminal) that is operated by a user corresponds to a non-AP Station. And, therefore, when an entity is simply mentioned to as an STA, the STA may also refer to a non-AP Station. Herein, the non-AP Station may also be referred to as other terms, such as a terminal, a wireless transmit/receive unit (WTRU), a user equipment (UE), a mobile station (MS), a mobile terminal, a mobile subscriber unit, and so on.

Additionally, the AP is an entity providing its associated station (STA) with an access to a distribution system (DS) through a wireless medium. Herein, the AP may also be referred to as a centralized controller, a base station (B), a Node-B, a base transceiver system (BTS), a personal basic service set central point/access point (PCP/AP), a site controller, and so on.

A BSS may be categorized as an infrastructure BSS and an independent BSS (IBSS).

The BSS shown in FIG. 1 corresponds to an IBSS. The IBSS refers to a BSS that does not include an AP. And, since the BSS does not include an AP, access to the DS is not authorized (or approved), and, therefore, the IBSS functions as a self-contained network.

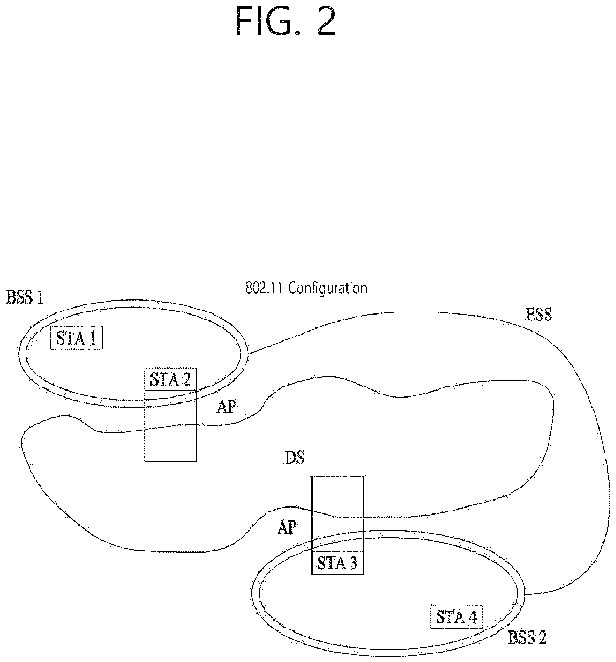

FIG. 2 is a diagram showing another exemplary configuration of a wireless LAN (WLAN) system.

The BSS shown in FIG. 2 corresponds to an infrastructure BSS. The infrastructure BSS includes one or more STAs and APs. As a rule, although the communication between non-AP STAs is established by passing through the AP, in case a direct link is configured between the non-AP STAs, direct communication may also be established between the non-AP STAs.

As shown in FIG. 2, a plurality of infrastructure BSSs may be interconnected to one another through the DS. The plurality of BSSs being interconnected to one another through the DS is collectively referred to as an extended service set (ESS). The STAs being included in the ESS may perform communication between one another, and, a non-AP STA may shift (or relocate) from one BSS to another BSS within the same ESS while performing uninterrupted communication.

As a mechanism that connects the plurality of APs, the DS is not necessarily required to correspond to a network. As long as the DS is capable of providing a predetermined distribution service, there is no limitation in the structure or configuration of the DS. For example, the DS may correspond to a wireless network, such as a mesh network, or the DS may correspond to a physical structure (or entity) that connects the APs to one another.

Hereinafter, a channel bonding method that is performed in a wireless LAN system will hereinafter be described in detail based on the description presented above.

### 1-2. Channel bonding in a wireless LAN (WLAN) system

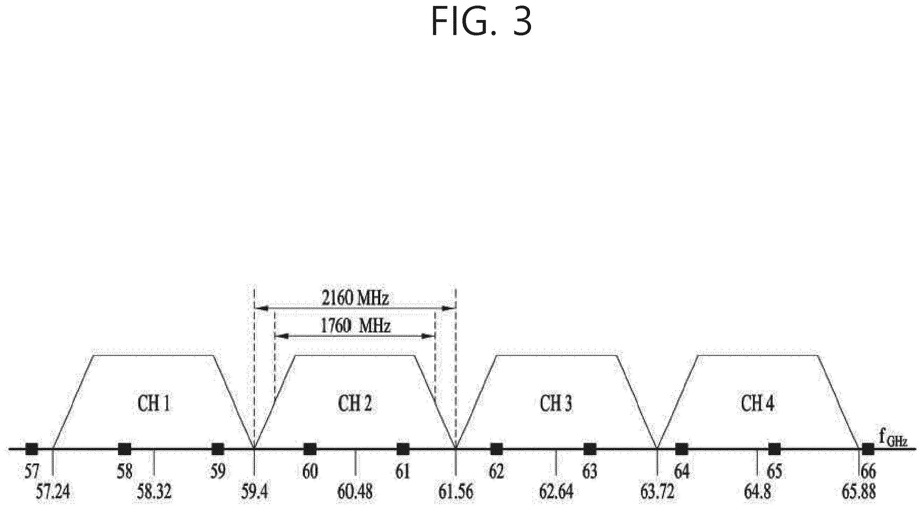

FIG. 3 is a diagram describing a channel in a 60GHz band for describing a channel bonding operation according to an exemplary embodiment of the present invention.

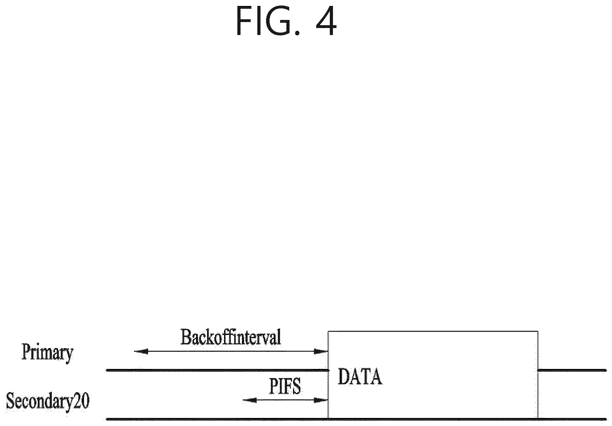

As shown in FIG. 3, 4 channels may be configured in a 60GHz band, and a general channel bandwidth may be equal to 2.16GHz. An ISM band (57 GHz ∼ 66 GHz), which is available for usage in 60GHz, may be differently regulated in accordance with the circumstances (or situations) of each country. Generally, among the channels shown in FIG. 3, since Channel 2 is available for usage is all regions, Channel 2 may be used as a default channel. Channel 2 and Channel 3 may be used is most regions excluding Australia. And, accordingly, Channel 2 and Channel 3 may be used for channel bonding. However, it shall be understood that diverse channels may be used for channel bonding. And, therefore, the present invention will not be limited to only one or more specific channels.

FIG. 4 is a diagram describing a basic method for performing channel bonding in a wireless LAN (WLAN) system.

The example shown in FIG. 4 corresponds to an example of combining two 20MHz channels and operating (or using) the combined channels for 40MHz channel bonding in an IEEE 802.11n system. In case of an IEEE 802.1 1ac system, 40/80/160 MHz channel bonding may be performed.

The two exemplary channels of FIG. 4 include a primary channel and a secondary channel, and the STA may examine the channel status of the primary channel, among the two channels, by using a CSMA/CA method. If the primary channel is idle during a constant backoff interval, and, at a time point where the backoff count is equal to 0, if the secondary channel is idle during a predetermined period of time (e.g., PIFS), the STA may transmit data by combining the primary channel and the secondary channel.

However, in case of performing contention-based channel bonding, as shown in FIG. 4, as described above, since channel bonding can be performed only in a restricted case where the secondary channel maintains the idle state during a predetermined period of time at a time point where the backoff count for the primary channel is expired, the usage of channel bonding is very restricted (or limited). And, therefore, there lies a difficulty in that measures cannot be flexibly taken in accordance with the circumstances (or situation) of the medium.

Accordingly, in an aspect of the present invention, a solution (or method) for performing scheduling-based access by having the AP transmit scheduling information to the STAs is proposed. Meanwhile, in another aspect of the present invention, a solution (or method) for performing contention-based channel access based on the above-described scheduling or independently from the above-described scheduling is proposed. Furthermore, in yet another aspect of the present invention, a method for performing communication through a spatial sharing technique based on beamforming is proposed.

### 1-3. Beacon interval configuration

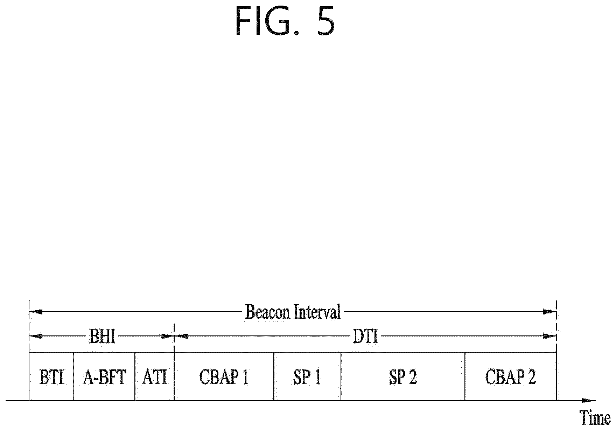

FIG. 5 is a diagram describing a configuration of a beacon interval.

In an 11ad-based DMG BSS system, the time of medium may be divided into beacon intervals. A lower level period within the beacon interval may be referred to as an access period. Each of the different access periods within one beacon interval may have a different access rule. Such information on the access period may be transmitted by an AP or personal basic service set control point (PCP) to a non-AP STA or non-PCP.

As shown in the example of FIG. 5, one beacon interval may include one Beacon Header Interval (BHI) and one Data Transfer Interval (DTI). As shown in FIG. 4, the BHI may include a Beacon Transmission Interval (BTI), an Association Beamforming Training (A-BFT), and an Announcement Transmission Interval (ATI).

The BTI refers to a period (or section or duration) during which one more DMG beacon frames may be transmitted. The A-BFT refers to a period during which beamforming training is performed by an STA, which has transmitted a DMG beacon frame during a preceding BTI. The ATI refers to a request-response based management access period between PCP/AP and non-PCP/non-AP STA.

Meanwhile, the Data Transfer Interval (DTI) refers to a period during which a frame exchange is performed between the STAs. And, as shown FIG. 5, one or more Contention Based Access Periods (CBAPs) and one or more Service Periods (SPs) may be allocated (or assigned) to the DTI. Although FIG. 5 shows an example where 2 CBAPs and 2 SPs are allocated to the DCI, this is merely exemplary. And, therefore, the present invention is not necessarily required to be limited only to this.

Hereinafter, a physical layer configuration in a wireless LAN (WLAN) system, in which the present invention is to be applied, will be described in detail.

### 1-4. Physical layer configuration

It will be assumed that the wireless LAN (WLAN) system according to an exemplary embodiment of the present invention may provide 3 different modulations mode as shown below.

**[Table 1]**

| PHY | MCS | Note |
|---|---|---|
| Control PHY | 0 | |
| Single carrier PHY | 1...12 | (low power SC PHY) |
| (SC PHY) | 25...31 | |
| OFDM PHY | 13...24 | |

Such modulation modes may be used for satisfying different requirements (e.g., high throughput or stability). Depending upon the system, among the modulation modes presented above, only some of the modulation modes may be supported.

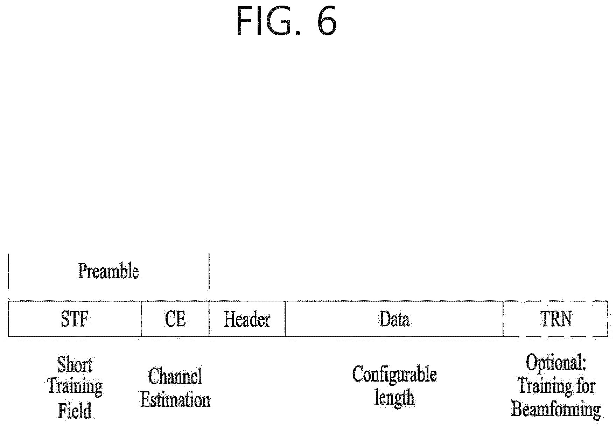

FIG. 6 is a diagram describing a physical configuration of a legacy radio frame.

It will be assumed that all Directional Multi-Gigabit (DMG) physical layers commonly include the fields that are shown below in FIG. 6. However, a regulation method of each individual field and a modulation/coding scheme used in each field may vary depending upon each mode.

As shown in FIG. 6, a preamble of a radio frame may include a Short Training Field (STF) and a Channel Estimation (CE). Additionally, the radio frame may also include a header and a data field as a payload of the radio frame and may optionally include a training (TRN) field for beamforming.

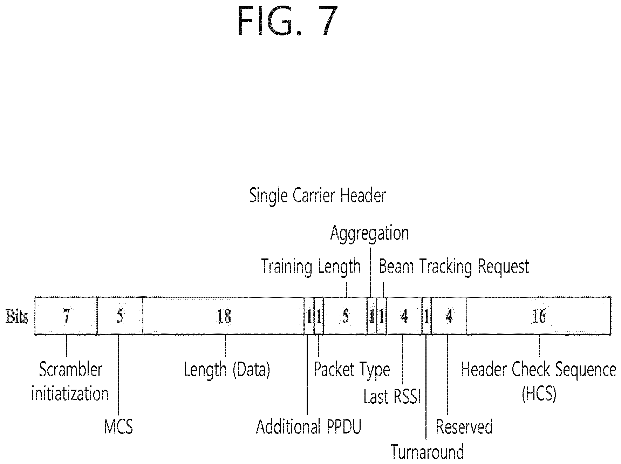

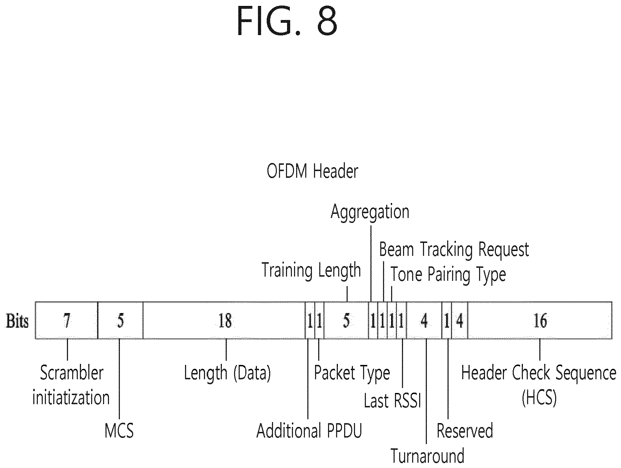

FIG. 7 and FIG. 8 are diagrams describing a configuration of a header field of the radio frame shown in FIG. 6.

More specifically, FIG. 7 illustrates a case where a Single Carrier (SC) mode is used. In the SC mode, the header may include information indicating an initial value of scrambling, information indicating a Modulation and Coding Scheme (MCS) and a data length, information indicating the presence or absence of an additional Physical Protocol Data Unit (PPDU), and information on a packet type, a training length, aggregation or non-aggregation, a presence or absence of a beam training request, a last Received Signal Strength Indicator (RSSI), truncation or non-truncation, a Header Check Sequence (HCS), and so on. Additionally, as shown in FIG. 7, the header has 4 bits of reserved bits, and, in the description presented below, such reserved bits may also be used.

Additionally, FIG. 8 illustrates a detailed configuration of a header corresponding to a case where the OFDM mode is applied. the header may include information indicating an initial value of scrambling, information indicating a MCS and a data length, information indicating the presence or absence of an additional PPDU, and information on a packet type, a training length, aggregation or non-aggregation, a presence or absence of a beam training request, a last RSSI, truncation or non-truncation, a Header Check Sequence (HCS), and so on. Additionally, as shown in FIG. 8, the header has 2 bits of reserved bits, and, just as int he case of FIG. 7, in the description presented below, such reserved bits may also be used.

As described above, the IEEE 802.11ay system considers for the first time the adoption of channel bonding the MIMO technique to the legacy 11ad system. In order to implement channel boning and MIMO, the 11ay system requires a new PPDU structure. In other words, when using the legacy 11ad PPDU structure, there are limitations in supporting the legacy user equipment (UE) and implementing channel bonding and MIMO at the same time.

For this, a new field for the 11ay UE may be defined after the legacy preamble and legacy header field for supporting the legacy UE. And, herein, channel bonding and MIMO may be supported by using the newly defined field.

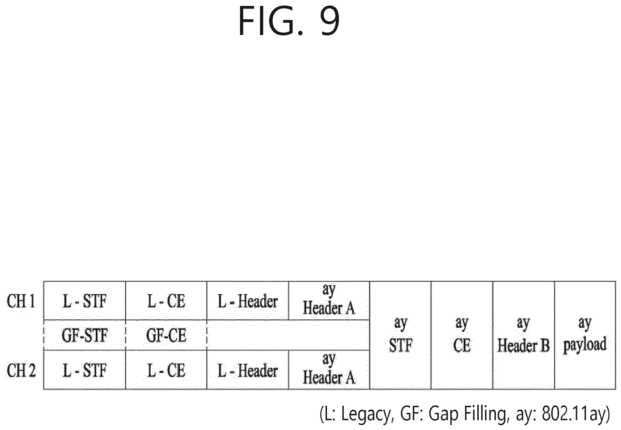

FIG. 9 is a diagram showing a PPDU structure according to a preferred embodiment of the present invention. In FIG. 9, a horizontal axis may correspond to a time domain, and a vertical axis may correspond to a frequency domain.

When two or more channels are bonded, a frequency band having a predetermined size (e.g., a 400MHz band) may exist between a frequency band (e.g., 1.83GHz) that is used between each channel. In case of a Mixed mode, a legacy preamble (legacy STF, legacy CE) is duplicated through each channel. And, according to the exemplary embodiment of the present invention, it may be considered to perform the transmission (gap filling) of a new STF and CE field along with the legacy preamble at the same time through the 400MHz band between each channel.

In this case, as shown in FIG. 9, the PPDU structure according to the present invention has a structure of transmitting ay STF, ay CE, ay Header B, and ay payload after legacy preamble, legacy header, and ay Header A via wideband. Therefore, the ay Header and ay Payload fields, which are transmitted after the Header field, may be transmitted through the channels that are used for the channel bonding. Hereinafter, in order to differentiate the ay Header from the legacy Header, the ay Header may be referred to as an enhanced directional multi-gigabit (EDMG) Header, and the corresponding terms may be used interchangeably.

For example, a total of 6 channels or 8 channels (each corresponding to 2.16 GHz) may exist in the 11ay system, and a maximum of 4 channels may be bonded and transmitted to a single STA. Accordingly, the ay header and the ay Payload may be transmitted through bandwidths of 2.16GHz, 4.32GHz, 6.48GHz, and 8.64GHz.

Alternatively, a PPDU format of a case where the legacy preamble is repeatedly transmitted without performing the above-described gap-filling may also be considered.

In this case, since the Gap-Filling is not performed, the PPDU has a format of transmitting the ay STF, ay CE, and ay Header B after the legacy preamble, legacy header, and ay Header A without the GF-STF and GF-CE fields, which are illustrated in dotted lines in FIG. 8.

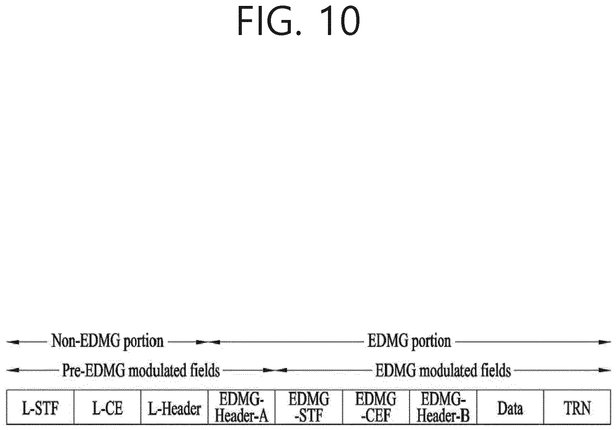

FIG. 10 is a diagram showing a simple PPDU structure that can be applied to the present invention. When briefly summarizing the above-described PPDU format, the PPDU format may be illustrated as shown in FIG. 10.

As shown in FIG. 10, the PPDU format that is applicable to the 11ay system may include L-STF, L-CEF, L-Header, EDMG-Header-A, EDMG-STF, EDMG-CEF, EDMG-Header-B, Data, and TRN fields, and the above-mentioned fields may be selectively included in accordance with the format of the PPDU (e.g., SU PPDU, MU PPDU, and so on).

Herein, the part (or portion) including the L-STF, L-CEF, and L-header fields may be referred to as a Non-EDMG portion, and the remaining part (or portion) may be referred to as an EDMG portion (or region). Additionally, the L-STF, L-CEF, L-Header, and EDMG-Header-A fields may be referred to as pre-EDMG modulated fields, and the remaining fields may be referred to as EDMG modulated fields.

### 3. Beamforming procedure applicable to the present invention

As described above, in an 11ay system applicable to the present invention, a method of channel bonding, channel aggregation, and FDMA transmitting data simultaneously using a plurality of channels may be applied. Particularly, in an 11ay system applicable to the present invention, a signal of a high frequency band is used, and in order to transmit and receive more reliably a signal, a beamforming operation may be applied.

However, in a conventional 11ad system, only a beamforming method for one channel is disclosed, but a beamforming method applicable to a plurality of channels is not suggested at all. In the present invention, a beamforming procedure for channel bonding or channel aggregation transmission using a plurality of channels will be described in detail.

In order to describe a beamforming procedure applicable to the present invention, a beamforming training procedure for one channel will be described in detail.

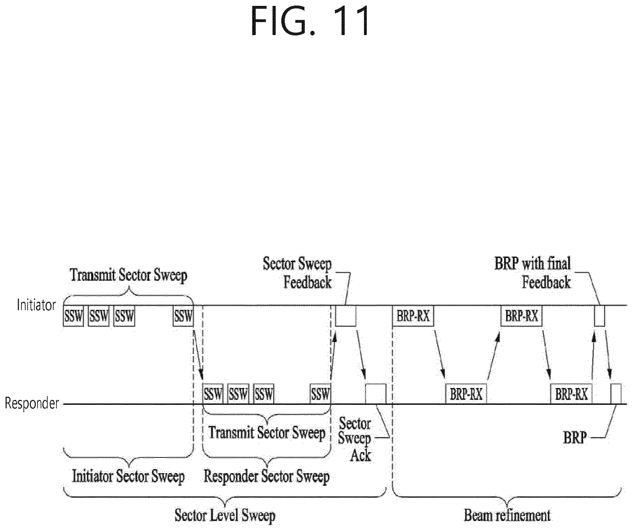

FIG. 11 is a diagram illustrating an example of a beamforming training process applicable to the present invention.

Basically, a beamforming procedure applicable to the present invention may be largely configured with a sector level sweep (SLS) phase and a beam refinement protocol or beam refinement phase (BRP). In this case, the BRP phase may be selectively performed.

Hereinafter, an STA that transmits data through a beamforming operation is referred to as an initiator, and an STA that receives data from the initiator is referred to as a responder.

In BF training occurring within association beamforming training (A-BFT) allocation, an AP or a PCP/AP is an initiator, and non-AP and non-PCP/AP STAs are responders. In BF training occurring within SP allocation, a source (EDMG) STA of the SP is an initiator, and a destination STA of the SP is a responder. In BF training within transmission opportunity (TXOP) allocation, a TXOP holder is an initiator, and a TXOP responder is a responder.

A link from the initiator to the responder is referred to as an initiator link, and a link from the responder to the initiator is referred to as a responder link.

In a 60 GHz band supported by the 11ay system applicable to the present invention, in order to more reliably transmit data and control information, a directional transmission method other than an omni transmission method may be applied.

As a process for this, STAs that want to transmit and receive data may know a TX or RX best sector for the initiator and the responder through an SLS process.

Such BF training starts together with sector level sweep (SLS) from the initiator. The purpose of the SLS phase is to enable communication between two STAs at a control PHY rate or higher MCS. In particular, the SLS phase provides transmission of only BF training.

Additionally, when there is a request from the initiator or the responder, the SLS may be followed by a beam refinement protocol or a beam refinement phase (BRP).

The purpose of the BRP phase is to enable reception training and to enable iterative refinement of an antenna weight vector (AWV) of all transmitters and receivers in all STAs. When one of STAs participating in beamforming training selects to use only one transmission antenna pattern, reception training may be performed as a part of an SLS phase.

More specifically, the SLS phase may include the following four elements: initiator sector sweep (ISS) for training an initiator link, responder sector sweep (RSS) for training a responder link, SSW feedback, and SSW ACK.

The initiator starts the SLS phase by transmitting a frame(s) of ISS.

The responder does not start transmission of a frame(s) of the RSS before the ISS has successfully completed. However, it may be an exception when ISS occurs within the BTI.

The initiator does not start SSW feedback before the RSS phase is successfully completed. However, it may be an exception when RSS occurs in A-BFT. The responder does not start the initiator's SSW ACK in A-BFT.

The responder immediately starts the initiator's SSW ACK after successful completion of the initiator's SSW feedback.

The BF frame transmitted by the initiator during the SLS phase may include a (EDMG) beacon frame, an SSW frame, and an SSW feedback frame. During the SLS phase, the BF frame transmitted by the responder may include an SSW frame and an SSW-ACK frame.

When the initiator and the responder each conduct transmit sector sweep (TXSS) during the SLS, at the end of the SLS phase, the initiator and the responder possess transmission sectors thereof. When ISS or RSS employs receive sector sweep, each responder or initiator possesses a receive sector thereof.

The STA does not change transmission power during sector sweep.

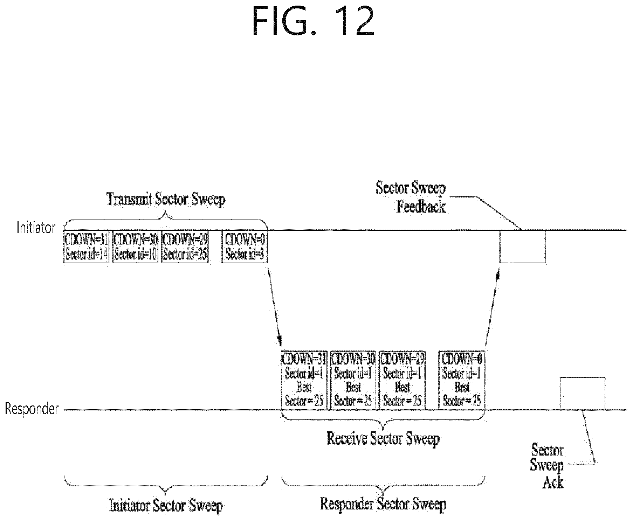

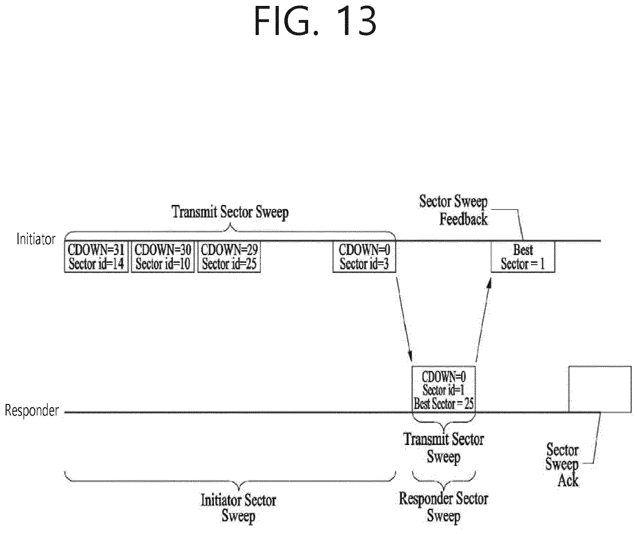

FIGS. 12 and 13 are diagrams illustrating examples of an SLS phase.

In FIG. 12, the initiator has many sectors, and the responder has one transmit sector and one receive sector used in RSS. Accordingly, the responder transmits all responder SSW frames through the same transmission sector, and at the same time, the initiator switches the receive antenna.

In FIG. 13, the initiator has many transmission sectors, and the responder has one transmission sector. In this case, reception training for the initiator may be performed in the BRP phase.

Such SLS may be summarized as follows.

The SLS is a protocol for performing link detection in an 802.11ay system applicable to the present invention and is a beamforming training method in which network nodes continuously transmit and receive frames containing the same information while changing only a beam direction and in which an index (e.g., signal to ratio (SNR), received signal strength indicator (RSSI), and the like) representing a performance of a receiving channel link among successfully received frames selects a best beam direction.

Thereafter, the BRP may be summarized as follows.

The BRP is a protocol that minutely adjusts a beam direction that can maximize a data rate in a beam direction determined by SLS or other means, and may be performed as needed. Such a BRP performs beam training using a BRP frame defined for a BRP protocol and including beam training information and information that reports training results. For example, the BRP transmits and receives BRP frames using beams determined by previous beam training and is a beam training method that substantially performs beam training using a beam training sequence included at the end of a successfully transmitted and received BRP frame. The SLS uses a frame itself for beam training, but may be different from the BRP in that the BRP uses only beam training sequences.

Such an SLS phase may be performed within a beacon header interval (BHI) and/or a data transfer interval (DTI).

First, the SLS phase performed during the BHI may be the same as the SLS phase defined in the 11ad system for coexistence with the 11ad system.

Thereafter, the SLS phase performed during the DTI may be performed when beamforming training between the initiator and the responder is not performed or when a beamforming link (BF link) is lost. In this case, when the initiator and the responder are an 11ay STA, the initiator and the responder may transmit a short SSW frame instead of an SSW frame for the SLS phase.

Here, the short SSW frame may be defined as a frame including a short SSW packet in a data field of a DMG control PHY or a DMG control mode PPDU. In this case, a specific format of the short SSW packet may be differently set according to use (e.g., I-TXSS, R-TXSS) in which the short SSW packet is transmitted.

Hereinafter, a beamforming training procedure for channel bonding or channel aggregation transmission using a plurality of channels based on a beamforming procedure for a single channel will be described in detail.

### 3.1. First Exemplary Embodiment

According to a first exemplary embodiment of a beamforming training procedure according to the present invention, an initiator may obtain a best sector ID (or best beam information corresponding thereto) of a primary channel (e.g., CH 1) in a system through an SLS phase with a responder. Thereafter, the initiator may perform beamforming training through a specific BRP phase as follows.

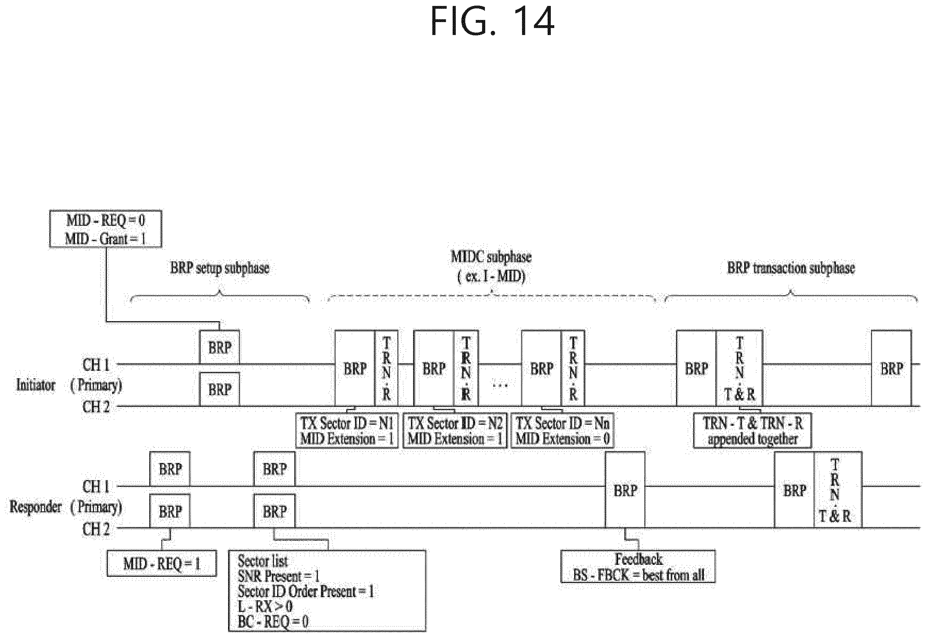

FIG. 14 is a diagram simply illustrating operations of an initiator and a responder according to a BRP phase applicable to the present invention. Hereinafter, a beamforming training operation applicable to the present invention will be described in detail with reference to FIG. 14.

### 3.1.1. BRP setup subphase

As described above, the initiator and the responder may obtain a control PHY link through a previous SLS phase. However, in the previous SLS phase, only a best sector ID of a primary channel in a system is obtained, and the initiator and the responder may transmit a BRP frame (or BRP packet) on a plurality of channel basis to transmit and receive a signal using the best sector ID of the primary channel. In other words, the initiator and the responder may transmit a BRP frame in another channel (e.g., CH2) based on the best sector ID of the primary channel.

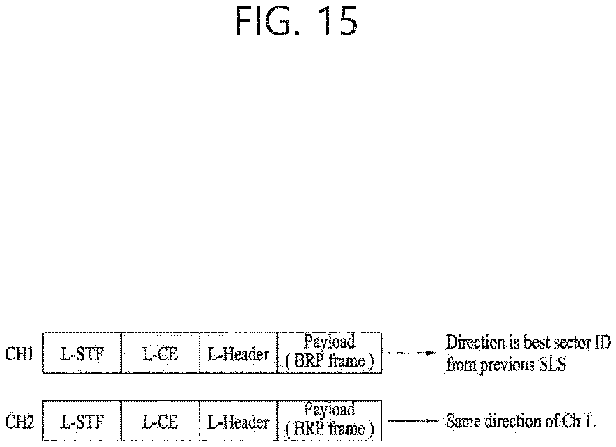

FIG. 15 is a diagram illustrating a PPDU format transmitted in a BRP setup subphase according to an example applicable to the present invention.

As shown in FIG. 15, the PPDU format transmitted in the BRP setup subphase is divided and transmitted on each channel basis, and a PPDU configuration transmitted in a channel other than the primary channel may be transmitted in the same direction as that of a PPDU configuration transmitted in the primary channel.

Through such a BRP setup subphase, the initiator may request only initiator-multiple sector ID detection (I-MID) or initiator-beam combining (I-BC).

Alternatively, the responder may request only responder-multiple sector ID detection (R-MID) or responder-beam combining (R-BC) through the BRP setup subphase independently of the initiator's operation.

In this case, the BRP frame may further include bandwidth (BW) or channel (CH) indication information as information for bandwidth negotiation of channels available for wideband beamforming training.

More specifically, it is required that the initiator and the responder know which channels they wish to use or which channels are available before performing wideband beamforming training with each other. For example, the initiator and the responder may perform BW/CH negotiation through a ready to send (RTS)/clear to send (CTS) frame. In this case, BW/CH negotiation using RTS/CTS may be selectively applied.

Accordingly, when BW/CH negotiation through RTS/CTS is not preceded, the initiator and the responder according to the present invention may perform BW negotiation as follows by transmitting and receiving the BRP frame in the BRP setup subphase.
(1) The initiator and the responder may negotiate BW information through reserved bits in the BRP frame or newly defined elements in the BRP frame.
(2) The initiator and the responder may negotiate BW information through an L-header field in the PPDU format. As a specific method for this, the initiator and the responder may negotiate BW information using a 'scrambler initialization' field of the L-header field in the PPDU format transmitted and received in the BRP setup subphase.
(3) By adding a control trailer to the PPDU format, the initiator and the responder may negotiate BW information.
   In this case, the control trailer may perform the same function as BW negotiation signaling of a control trailer used for RTS/DMG CTS transmission. For example, the BRP frame may be transmitted to a management frame or a control PHY of an MCS 0, and by attaching the control trailer to the PPDU format, the PPDU format may perform the same signaling as the control trailer of RTS/DMG CTS.
(4) The initiator and the responder may negotiate BW information using an EDMG Header-A included in the PPDU format.
(5) When the above-described methods may not be supported, the initiator and the responder may perform BW negotiation by transmitting and receiving RTS/DMG CTS frames to and from each other before transmitting the BRP frame. Thereafter, according to the BW negotiation result through RTS/DMG CTS, the initiator and the responder may transmit the BRP frame in a duplicate mode through available channels.

BW information indicated through the above-described methods may not be BW corresponding to the actual transmitted PPDU format but may be BW indicating which channels the initiator/responder may perform signal transmission.

The above-described methods (1) to (4) and (5) may be simultaneously supported.

Further, in the SLS phase performed before the BRP phase, when beamforming training is performed using a short SSW frame other than a general SSW frame, the BRP frame may be changed as follows. This is because the short SSW frame includes a countdown (CDOWN) field and a radio frequency (RF) chain ID field instead of a conventional sector ID field and antenna ID field.

A BRP frame applicable to the present invention may include a CDOWN field and an RF chain field instead of a TX-Sector field by modifying a conventional BRP frame.

A BRP frame applicable to the present invention may include a CDOWN field and an RF chain field by adding a new element to a conventional BRP frame.
- A BRP frame applicable to the present invention may be newly defined. In this case, the newly defined BRP frame may be referred to as an EDMG BRP frame. The EDMG BRP frame may include a CDOWN field and an RF chain field instead of the TX-Sector field.

The BRP frame applicable to the present invention may be used for feedback or a response. In this case, the BRP frame may include a plurality of sector IDs and antenna IDs as information to be transmitted to an STA requesting feedback or a response. In this case, the BRP frame may include a CDOWN field and an RF chain field instead of a sector ID and an antenna ID.

Further, the initiator and the responder may negotiate a signal transmission method through the BRP setup subphase. More specifically, the initiator and the responder may negotiate whether single user-multiple input multiple output (SU-MIMO), multi user-multiple input multiple output (MU-MIMO), channel bonding, and channel aggregation transmission is performed through transmission and reception of the BRP frame during the BRP frame setup subphase.

In this case, in order for the initiator and the responder to negotiate whether SU-MIMO and MU-MIMO, the BRP frame may be newly defined as follows.
- The BRP frame applicable to the present invention may include an antenna, an RF chain, a TX attribute weight value (AWV), an RV AWV, and a set of AWV by partially modifying a conventional BRP frame.
- The BRP frame applicable to the present invention may include an antenna, an RF chain, a TX AWV, an RX AWV, and a set of AWV by adding a new element to a conventional BRP frame.
- The BRP frame applicable to the present invention may be newly defined and may be thus defined to a BRP frame including an RF chain, a TX AWV, a RX AWV, and a set of AWV.

In this way, according to the present invention, the PPDU format used in the BRP setup subphase is a legacy format, may support a legacy system, and may be transmitted in a control PHY mode, thereby enabling robust transmission.

### 3.1.2. MIDC subphase

In the present invention, the MIDC subphase may be selectively applied.

The initiator and the responder may perform a beamforming method (e.g., I-MID, R-MID) negotiated in the BRC setup subphase in the MIDC subphase. FIG. 14 illustrates a configuration in which the initiator performs only I-MID, but the responder according to the present invention may perform R-MID through the MIDC subphase.

In the MIDC subphase, the initiator and the responder may transmit and receive a BRP frame including an AGC field and a TRN (e.g., TRN-R) field in an entire band for broadband beamforming training. Thereby, the initiator and the responder may perform a beamforming trial between small sets of a sector (e.g., TX sector) based on SLS results through the primary channel in the system and AWV setup (e.g., RX AWV setup).

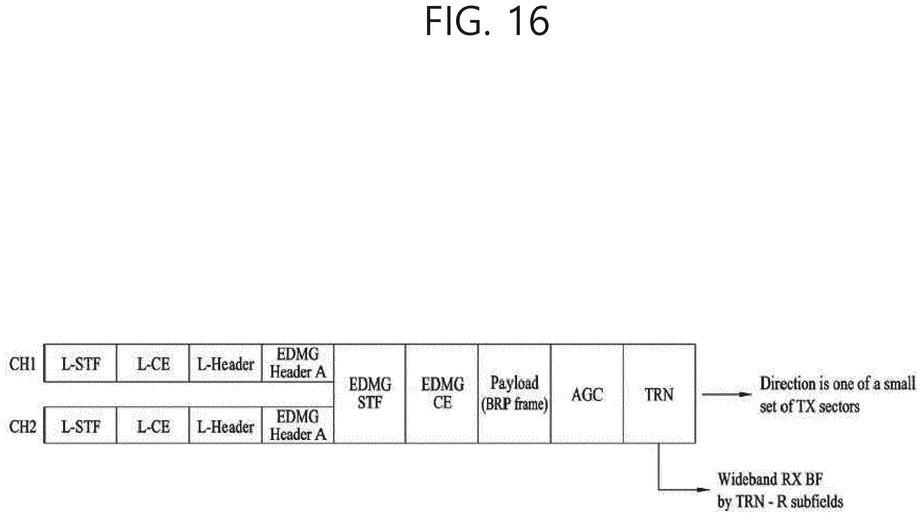

FIG. 16 is a diagram illustrating a PPDU format transmitted in an MIDC subphase according to an example applicable to the present invention.

As shown in FIG. 16, the PPDU format (e.g., BRP packet) transmitted in the MIDC subphase may be an EDMG PPDU format including an AGC field and/or a TRN field.

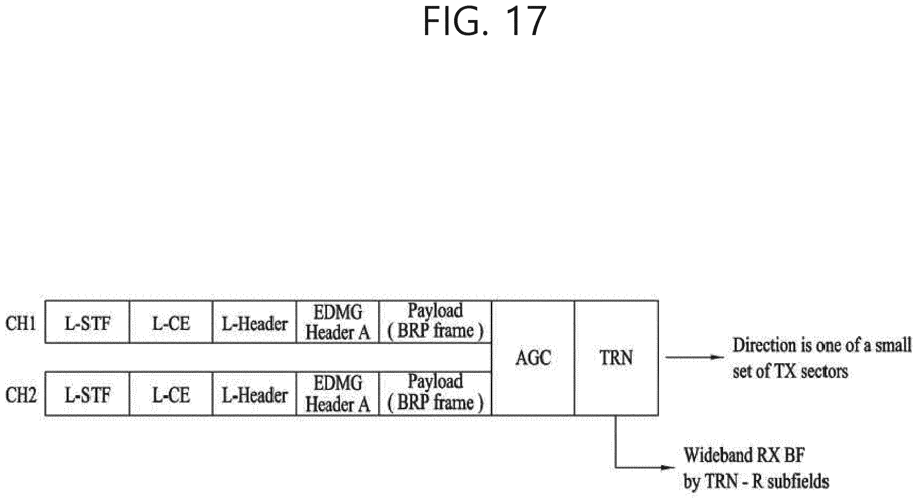

FIG. 17 is a diagram illustrating a PPDU format transmitted in an MIDC subphase according to another example applicable to the present invention.

As shown in FIG. 17, the PPDU format transmitted in the MIDC subphase may not include an EDMG STF field and an EDMG CE field, compared with the PPDU format shown in FIG. 16. Such a PPDU format has a merit that a signal overhead in the MIDC subphase may be reduced.

Further, a payload transmitted until wideband beamforming training is performed in the PPDU format of FIG. 16 or 17 may be duplicated and transmitted on each channel basis. Thereby, even if the PPDU format is transmitted in a sector ID direction obtained in SLS performed through the primary channel, characteristics of the channel may be maintained. Thereafter, the AGC field and the TRN field may be used for wideband beamforming training through a wideband channel. In other words, the AGC field and the TRN field may be transmitted in a direction of one of the PPDU format and a small set of TX sectors, and wideband RX beamforming may be performed through the TRN-R subfield.

Alternatively, the PPDU format transmitted in the MIDC subphase may include only a BRP frame without a TRN field. In this case, the PPDU format transmitted while including the EDMG Header-A field may be used for only wideband beamforming training.

In this case, information on BW of the AGC field and/or the TRN field in the PPDU format may be transmitted through an L-Header field or an EDMG Header-A field in the PPDU format. In particular, information on the BW may be divided and indicated into the case of channel bonding transmission and the case of channel aggregation transmission. Alternatively, information on BW of the AGC field and the TRN field in the PPDU format may be signaled through the BRP setup subphase described above.

In this way, according to the present invention, the PPDU format used in the MIDC subphases may be used for broadband beamforming training. Alternatively, because a channel state of a wide band may not be known, frames up to the BRP frame may be transmitted in a duplicate mode.

### 3.1.3. BRP transaction subphase

By transmitting and receiving a BRP frame during a BRP transaction subphase, the initiator and the responder may perform wideband beamforming. In this case, the initiator and the responder may perform wideband TX and/or RX beamforming training through transmission and reception of one BRP frame. In this case, the BRP frame transmitted during the BRP transaction subphase may include an AGC field, a TRN-T field, and/or a TRN-R field.

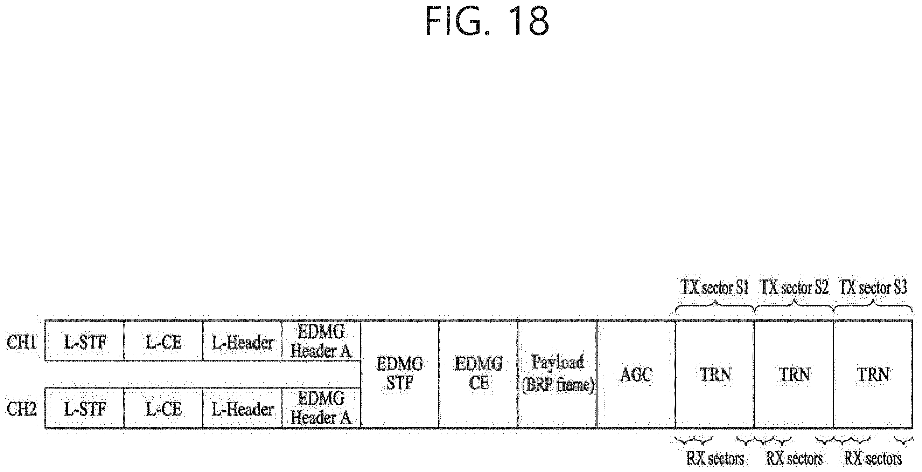

FIG. 18 is a diagram illustrating a PPDU format transmitted in a BRP transaction subphase according to an example applicable to the present invention.

As shown in FIG. 18, a PPDU format (e.g., a BRP packet) transmitted in the BRP transaction subphase may be an EDMG PPDU format including an AGC field, a TRN-T field, and/or a TRN-R field.

In addition, the PPDU format transmitted in the BRP transaction subphase may not include an EDMG STF field and an EDMG CE field, compared with the PPDU format of FIG. 18, as shown in FIG. 17. Such a PPDU format has the advantage of reducing a signal overhead in the BRP transaction subphase.

Further, the initiator and the responder according to the present invention may transmit a BRP frame in different forms according to/based on whether beamforming training on channel bonding is performed before the BRP transaction subphase as follows.

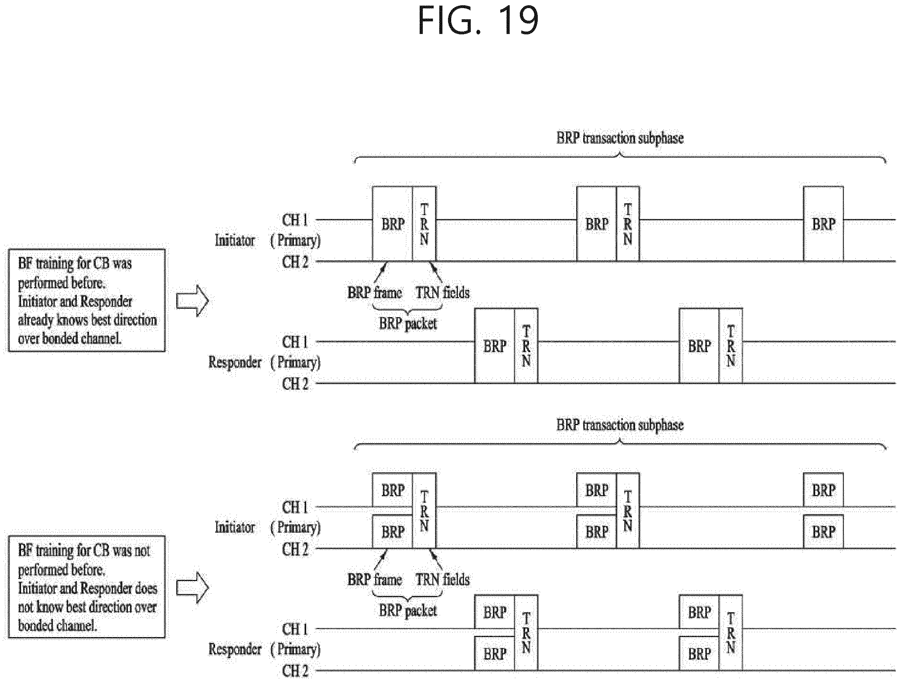

FIG. 19 is a diagram illustrating a configuration of transmitting a BRP packet according to an example of the present invention.

As shown in an upper drawing of FIG. 19, when beamforming training on channel bonding is performed before the BRP transaction subphase, the initiator and the responder may transmit a BRP frame and a TRN field through an entire bonded channel. This is because the initiator and the responder know a best beam direction of the entire bonded channel.

Alternatively, as shown in a lower drawing of FIG. 19, when beamforming training of channel bonding is not performed before the BRP transaction subphase, the initiator and the responder may transmit a BRP frame in a duplicate mode on each channel basis and transmit a TRN field through an entire bonded channel. This is because the initiator and the responder do not know a best beam direction of the entire bonded channel.

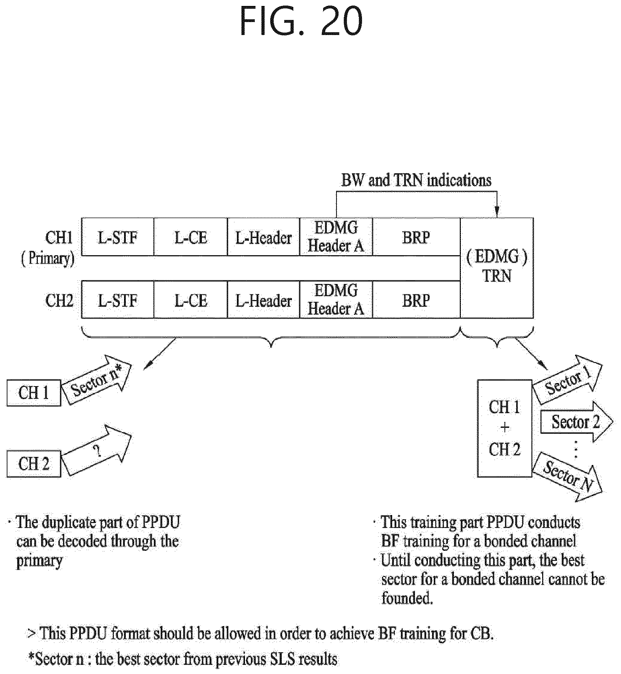

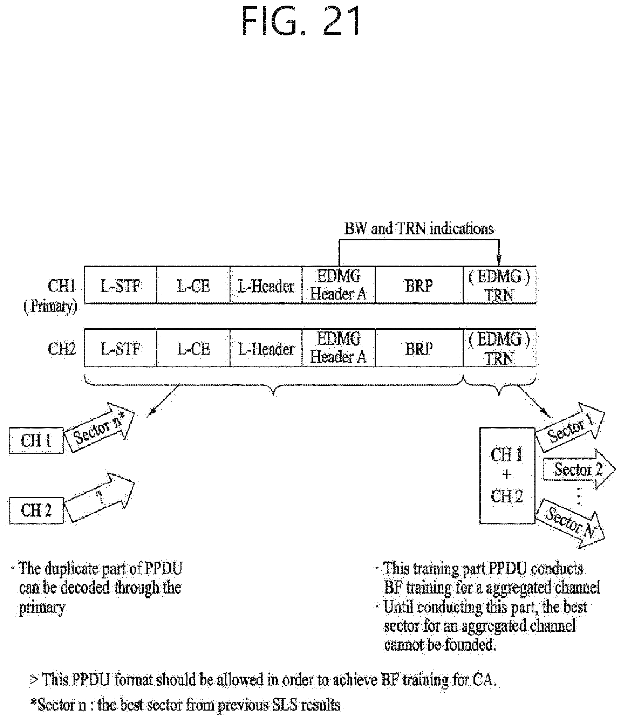

FIGS. 20 and 21 are diagrams simply illustrating operations in a BRP transaction subphase of an STA according to an example of the present invention.

First, when beamforming training of a bonded channel between the initiator and the responder is not performed before the BRP transaction subphase, the initiator and the responder may transmit and receive a PPDU format configured as shown in FIG. 20.

More specifically, as shown in FIG. 20, a duplicate portion (e.g., L-STF, L-CE, L-Header, EDMG Header-A, and BRP frame) of the PPDU format may be transmitted and received in a specific sector direction, and the specific sector direction may be a sector direction of a primary channel determined by the previous SLS phase. Thereafter, the initiator and the responder may perform beamforming training of a channel bonded through a TRN field of the PPDU format. For this purpose, the initiator and the responder may perform signal transmission and reception in a plurality of sector directions in the TRN field. Through such a process, the initiator and the responder may perform beamforming training on channel bonding (CB).

In this case, information such as a bandwidth for the TRN field may be transmitted through an EDMG Header-A field transmitted in a duplicate mode. Further, a duplicate portion of the PPDU format may be decoded through a primary channel in the system.

Thereafter, when beamforming training of aggregated channels between the initiator and the responder is not performed before the BRP transaction subphase, the initiator and the responder may transmit and receive a PPDU format configured as shown in FIG. 21.

More specifically, as shown in FIG. 21, a duplicate portion (e.g., L-STF, L-CE, L-Header, EDMG Header-A, and BRP frame) of the PPDU format may be transmitted and received in a specific sector direction, and the specific sector direction may be a sector direction of the primary channel determined by the previous SLS phase. Thereafter, the initiator and the responder may perform beamforming training of aggregated channels through a TRN field of the PPDU format. For this purpose, the initiator and the responder may perform signal transmission and reception in a plurality of sector directions in the TRN field. Through such a process, the initiator and the responder may perform beamforming training on channel aggregation (CA).

In this case, information such as a bandwidth of the TRN field may be transmitted through an EDMG Header-A field transmitted in a duplicate mode. Further, a duplicate portion of the PPDU format may be decoded through the primary channel in the system.

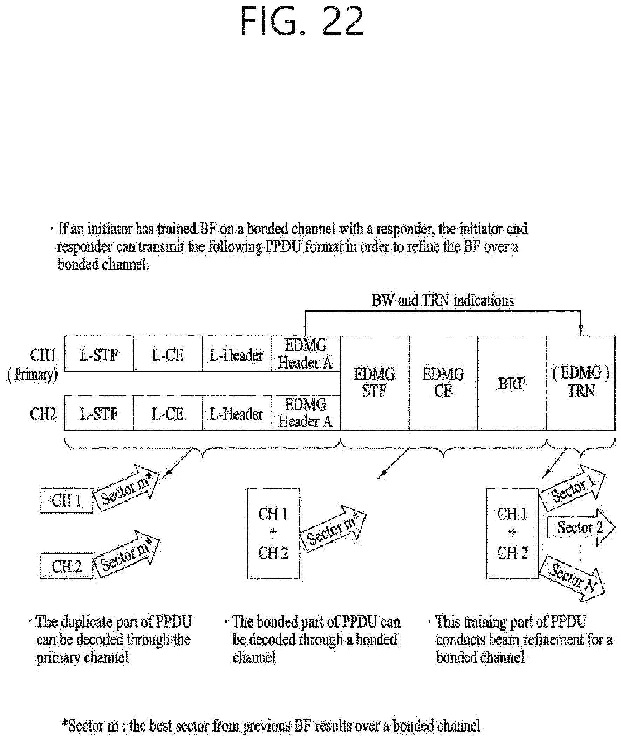

FIG. 22 is a diagram simply illustrating an operation in a BRP transaction subphase of an STA according to another example of the present invention.

In FIG. 22, unlike in FIGS. 20 and 21, when beamforming training of a bonded channel (or an aggregated channel) between the initiator and the responder is performed before the BRP transaction subphase, operations of the initiator and the responder will be described. In this case, the initiator and the responder may transmit and receive a PPDU format configured as shown in FIG. 22.

More specifically, as shown in FIG. 22, a duplicate portion (e.g., L-STF, L-CE, L-Header, and EDMG Header-A) of the PPDU format may be transmitted and received in a specific sector direction, and the specific sector direction may be a sector direction determined by beamforming training of a previously bonded channel (or aggregated channel). Thereafter, the initiator and the responder may transmit and receive a bonded portion (e.g., EDMG STF, EDMG CE, and BRP frame) of the PPDU format in the specific sector direction in a bonded form. Thereafter, the initiator and the responder may perform beamforming training of the channel bonded through the TRN field of the PPDU format. For this purpose, the initiator and the responder may perform signal transmission and reception in a plurality of sector directions in the TRN field. Through such a process, the initiator and the responder may perform beamforming training on beam refinement of the bonded channel (or aggregated channel).

In this case, information such as a bandwidth of the TRN field may be transmitted through an EDMG Header-A field transmitted in a duplicate mode. Further, a duplicate portion of the PPDU format may be decoded through the primary channel in the system, and the bonded portion may be decoded through the bonded channel.

Various PPDU formats as described above may be transmitted in an EDMG control PHY mode. In other words, the various PPDU formats may transmit fields other than the TRN in a duplicate mode.

In this case, information on BW of the AGC field and/or the TRN field in the PPDU format may be transmitted through the L-Header field or the EDMG Header-A field in the PPDU format.

For example, information on BW of the TRN field may be transmitted through the EDMG Header-A field, and thus the TRN structure may be set differently.

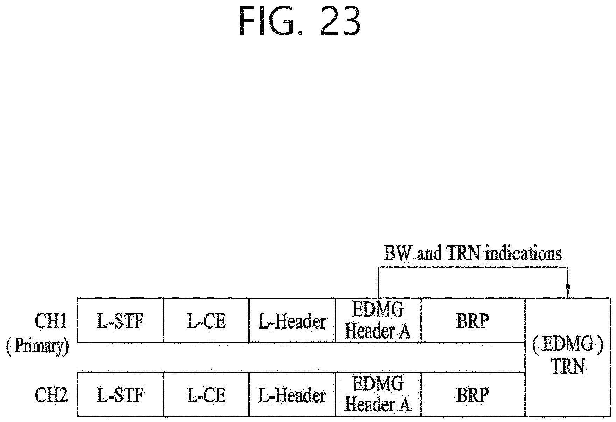

FIG. 23 is a diagram simply illustrating a BRP packet applicable to the present invention.

As shown in FIG. 23, the EDMG Header-A field included in the PPDU format applicable to the present invention may include an indicator indicating a TRN structure. In this case, the indicator has a size of 1 bit and may be referred to as a 'TRN Aggregation' subfield. When the EDNG TRN Length field is '0', the 'TRN Aggregation' subfield may be reserved. Alternatively, when the 'TRN Aggregation' subfield is set to '0', a BW subfield of the EDMG Header-A field specifies that a TRN field of the PPDU format is appended to a 2.16 GHz, 4.32 GHz, 6.48 GHz, or 8.64 GHz channel. Alternatively, when the 'TRN Aggregation' subfield is set to '1', a BW subfield of the EDMG Header-A field specifies a 2.16 + 2.16 GHz channel or a 4.32 + 4.32 GHz channel.

For reference, the EDMG Header A field in the PPDU format may include field information (e.g., subfield) of Table 2.

**[Table 2]**

| **Field** | **Number of bits** | **Start bit** |
|---|---|---|
| BW | 8 | 0 |
| Primary Channel Number | 3 | 8 |
| PSDU Length | 10 | 11 |
| TRN Aggregation | 1 | 21 |
| EDMG TRN Length | 8 | 22 |
| RX TRN-Units per Each TX TRN-Unit | 8 | 30 |
| EDMG TRN-Unit P | 2 | 38 |
| EDMG TRN-Unit M | 4 | 40 |
| EDMG TRN-Unit N | 2 | 44 |
| TRN-Unit RX Pattern | 1 | 46 |
| Reserved | 1 | 47 |

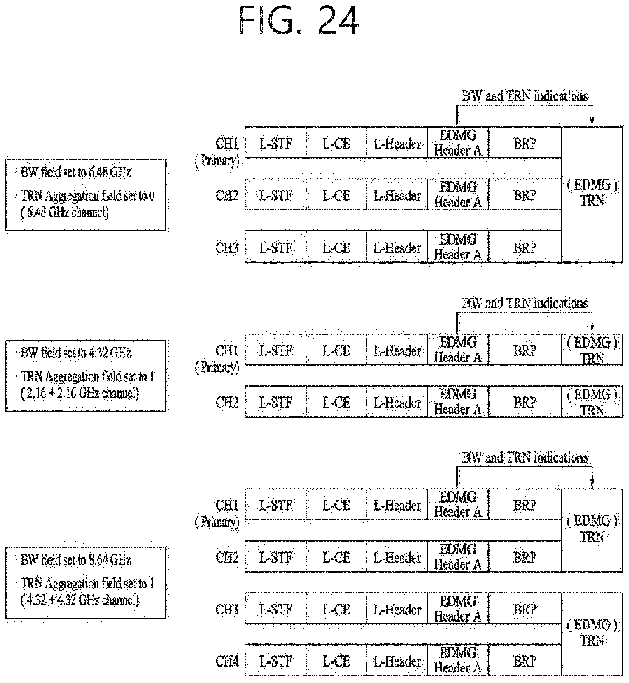

Accordingly, the BRP packet of the EDMG control PHY mode may be configured in various PPDU formats as shown in FIG. 24 according to a value of field information in the EDMG Header-A field.

FIG. 24 is a diagram simply illustrating structures of a BRP packet applicable to the present invention.

As shown in FIG. 24, the PPDU format (or BRP packet) transmitted and received in the BRP transaction subphase may be configured in various structures according to values indicated by the BW subfield and the TRN Aggregation subfield in the EDMG Header-A field.

In addition, information on the BW may be indicated through a 'scrambler initialization' subfield in the L-Header field or a 'TRN bandwidth' subfield in the EDMG Header-A field. Alternatively, information on the BW may be indicated through a reserved bit of the BRP frame or a newly defined element.

In this way, the PPDU format used in the BRP transaction subphase according to the present invention may be used for broadband beamforming training. Alternatively, because a channel state of a wide band may not be known, frames up to the BRP frame may be transmitted in a duplicate mode.

According to a first exemplary embodiment of a beamforming training procedure according to the present invention, the initiator and the responder may perform a BRP setup subphase, a MIDC subphase (may be optionally performed), and a BRP transaction subphase following the SLS phase.

In this case, in the MIDC subphase (or a new beamforming training phase for 11ay), I-MID may be performed before R-MID, and I-BC may be performed before R-BC. Alternatively, in the MIDC subphase, only I-MID may be performed without R-MID, and only I-BC may be performed without R-BC. This is because an STA wanting to transmit data (with a method such as channel bonding or channel aggregation) usually becomes an initiator, and the initiator may want only TX beamforming training and the responder may want only RX beamforming training. Thus, by performing only some training operations as in the present invention, substantially unnecessary beamforming training operations may be omitted.

Further, the above-described beamforming training operation may be used for beamforming training of SU-MIMO and MU-MIMO as well as for wideband beamforming training.

### 3.1.4. Beam tracking phase

Additionally, when substantially transmitting and receiving data, the initiator and the responder may perform beamforming through a beam tracking phase. That is, the beam tracking phase may be performed separately from the BRP phase described above.

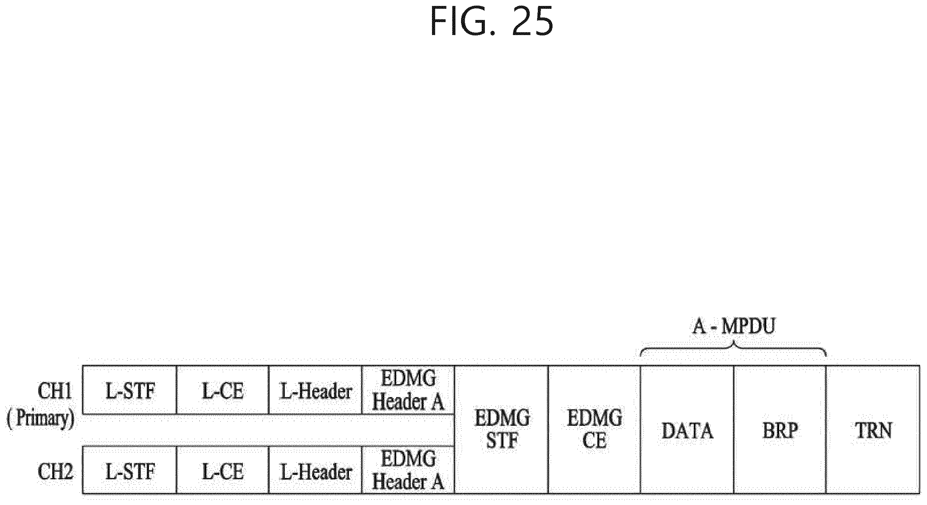

FIG. 25 is a diagram illustrating a PPDU format transmitted in a beam tracking phase according to an example applicable to the present invention.

As shown in FIG. 25, the PPDU format transmitted in the beam tracking phase may include a data field and a BRP frame. In this way, when the BRP frame is attached and transmitted to a data field, a bandwidth structure of the BRP frame may be the same as that of the data field. Further, a bandwidth structure of the TRN field may be the same as that of the BRP frame or may be set differently according to the purpose of beam tracking. Such features may be determined through request and response processes.

For example, data may be transmitted in a channel bonding method, but beam tracking may be required only for one of channels, when a subsequent signal transmission method is transmission using one channel, or when a beam link of a primary channel in the system is weak, a TRN field in the PPDU format of FIG. 25 may be transmitted (or attached) to only the one channel. Alternatively, in the PPDU format of FIG. 25, the TRN field may be transmitted (or attached) in a form of channel aggregation transmission of two bonded channels.

### 3.2. Second Exemplary Embodiment

According to a second exemplary embodiment of a beamforming training procedure according to the present invention, the initiator and the responder may perform the following SLS phase before the BRP phase described in the first exemplary embodiment.

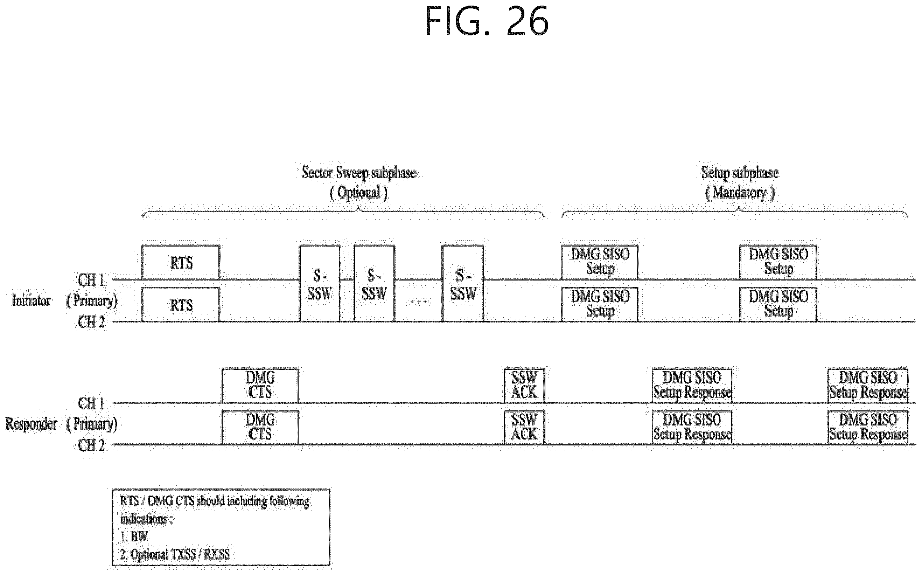

FIG. 26 is a diagram simply illustrating an SLS phase according to a second exemplary embodiment of the present invention.

As shown in FIG. 25, the SLS phase may be largely configured with a sector sweep subphase and a setup subphase. Hereinafter, an operation of each subphase will be described in detail.

### 3.2.1. Sector Sweep Subphase

In the present invention, the sector sweep subphase may be selectively performed.

In the sector sweep subphase, the initiator and the responder may duplicate and transmit RTS/DMG CTS or a frame that performs the same function as that of RTS/DMG CTS using idle channels of the initiator and the responder. In this case, in order to support channel bonding or channel aggregation, the initiator and the responder may transmit the RTS/DMG CTS frame together with channel or bandwidth information occupied by the RTS/DMG CTS frame. Further, the initiator and the responder may transmit information notifying whether sector sweep for broadband (e.g., channel bonding, channel aggregation) beamforming training is performed and whether to perform TXSS or RXSS when sector sweep is performed together with the above information.

Using the BW information and broadband beamforming training information, the initiator and the responder may perform sector sweep of the bandwidth using an SSW frame or a short SSW frame. FIG. 26 illustrates a case in which only the initiator's TXSS is performed, but in another exemplary embodiment of the present invention, RXSS of the responder may be performed. In this case, whether TXSS or RXSS is performed may be selected to one of two.

### 3.2.2. Sector Sweep subphase

In the setup subphase, by transmitting a DMG SISO setup frame to the responder, the initiator may transmit the following information.
- Information requesting whether to perform TX training or RX training or to perform both TX/RX training in a subsequently performed EDMG beamforming training phase (e.g., BRP phase)
- Information requesting whether to perform initiator training or responder training or to inform both initiator/responder training in a subsequently performed EDMG beamforming training phase (e.g., BRP phase)
- Information in which the initiator requests sector ID information received by the responder and/or signal to noise ratio (SNR) and/or channel measurement information of a corresponding sector ID to the respondent in a previous sector sweep process. In this case, the information may include antenna or RF ID information used by the initiator and the responder.
- Information in which the initiator notifies the responder of sector ID information received by the initiator and/or SNR and/or channel measurement information of a corresponding sector in a previous sector sweep process. In this case, the information may include antenna or RF ID information used by the initiator and the responder.

Accordingly, by transmitting a DMG SISO response frame to the initiator, the responder may transmit the following information.
- Information indicating whether to perform TX training or RX training or to perform both TX/RX training in a subsequently performed EDMG beamforming training phase (e.g., BRP phase)
- Information indicating whether to perform initiator training or responder training or to perform both initiator/responder training in a subsequently performed EDMG beamforming training phase (e.g., BRP phase)

Information requesting sector ID information received by the initiator and/or signal to noise ratio (SNR) and/or channel measurement information of a corresponding sector ID in a previous sector sweep process. In this case, the information may include antenna or RF ID information used by the initiator and the responder.

Thereafter, through the above-described SLS phase, the initiator and the responder may obtain best sector ID information for broadband transmission (e.g., channel bonding or channel aggregation transmission). Accordingly, the BRP phase may be performed later using the information.

In this case, in a beamforming training procedure according to a second exemplary embodiment of the present invention, a PPDU format (e.g., BRP frame) transmitted in the BRP setup subphase may be transmitted in a direction corresponding to best sector ID information for broadband transmission (e.g., channel bonding or channel aggregation transmission) unlike the first exemplary embodiment. Other configurations may be applied in the same manner as the configuration of the first exemplary embodiment.

Hereinafter, a beamforming training method between an initiator and a responder will be described as an example based on the above-described configurations of the present invention.

The initiator and the responder may perform a beamforming training procedure for signal transmission and reception between each other through a plurality of channels. In this case, both the initiator and the responder may be stations that transmit or receive signals or data. Hereinafter, for convenience of description, it is assumed that the initiator is a station that wants to transmit a signal or data and that the responder is a station that wants to receive a signal or data.

The initiator performs beamforming training on a plurality of channels with the responder before transmitting the signal to the responder through a plurality of channels. For this purpose, the initiator transmits a physical protocol data unit (PPDU) including an enhanced directional multi gigabit (EDMG) header A field indicating whether a signal transmission method through the plurality of channels is channel bonding or channel aggregation and a training (TRN) field having different structures according to/based on information indicated by the EDMG header A field to the responder.

Thereafter, the initiator transmits signals or data to the responder through the plurality of channels based on the previously performed beamforming training result.

In this case, the EDMG header A field is duplicated and transmitted through each channel included in the plurality of channels, and the TRN field may be transmitted in a channel bonding transmission or channel aggregation transmission method according to/based on information indicated by the header A field.

Accordingly, the responder may receive the PPDU from the initiator to perform beamforming training and receive signals or data from the initiator through the plurality of channels based on the beamforming training result.

In this case, the PPDU may be configured in an order of a legacy shot training field (L-STF), a legacy channel estimation (L-CE) field, a legacy header (L-Header) field, the EDMG header A field, a beam refinement protocol (BRP) frame, and the TRN field.

Particularly, in the previously performed sector level sweep (SLS) phase, the BRP frame may include one of a sector identity (ID) field and a count DOWN (CDOWN) field according to/based on whether a short sector sweep (SSW) frame is used.

For example, when a short SSW frame is used in the previously performed SLS phase, the BRP frame may include a CDOWN field, and when a short SSW frame is not used in the previously performed SLS phase, the BRP frame may include a sector ID field.

When a signal transmission method through the plurality of channels is channel bonding, the channel bonding may include two to four channel bonding. Alternatively, when a signal transmission method through the plurality of channels is channel aggregation, the channel aggregation may include two channel aggregation or four channel aggregation.

In this case, the PPDU may not include an EDMG-STF field, an EDMG-CE field, and an EDMG Header-B field.

The EDMG header A field included in the PPDU may include a 1-bit size indicator indicating whether a signal transmission method through the plurality of channels is channel bonding or channel aggregation. In this case, a TRN aggregation subfield may be applied to the 1-bit size indicator.

### 4. Device configuration

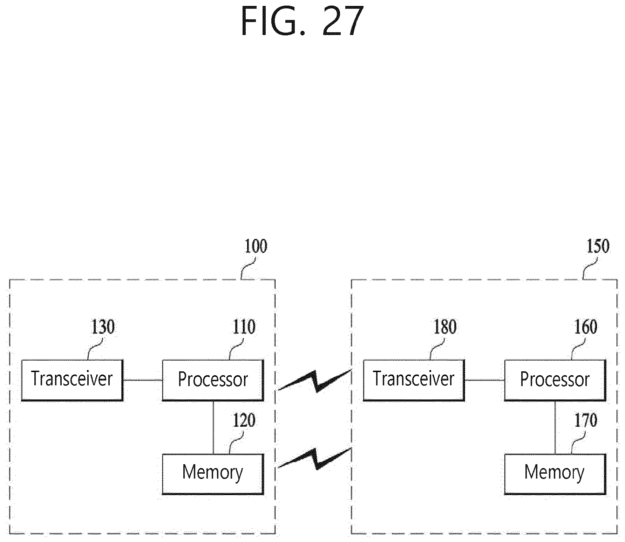

FIG. 27 is a diagram describing a device for implementing the above-described method.

Awireless device (100) of FIG. 27 may correspond to an initiator STA, which transmits a signal that is described in the description presented above, and a wireless device (150) may correspond to a responder STA, which receives a signal that is described in the description presented above. At this point, each station may correspond to a 11ay device (or user equipment (UE)) or a PCP/AP. Hereinafter, for simplicity in the description of the present invention, the initiator STA transmits a signal is referred to as a transmitting device (100), and the responder STA receiving a signal is referred to as a receiving device (150).

The transmitting device (100) may include a processor (110), a memory (120), and a transmitting/receiving unit (130), and the receiving device (150) may include a processor (160), a memory (170), and a transmitting/receiving unit (180). The transmitting/receiving unit (130, 180) transmits/receives a radio signal and may be operated in a physical layer of IEEE 802.11/3GPP, and so on. The processor (110, 160) may be operated in the physical layer and/or MAC layer and may be operatively connected to the transmitting/receiving unit (130, 180).

The processor (110, 160) and/or the transmitting/receiving unit (130, 180) may include application-specific integrated circuit (ASIC), other chipset, logic circuit and/or data processor. The memory (120, 170) may include read-only memory (ROM), random access memory (RAM), flash memory, memory card, storage medium and/or other storage unit. When the embodiments are executed by software, the techniques (or methods) described herein can be executed with modules (e.g., processes, functions, and so on) that perform the functions described herein. The modules can be stored in the memory (120, 170) and executed by the processor (110, 160). The memory (120, 170) can be implemented (or positioned) within the processor (110, 160) or external to the processor (110, 160). Also, the memory (120, 170) may be operatively connected to the processor (110, 160) via various means known in the art.

### INDUSTRIAL APPLICABILITY

Although the present invention has been described in detail under the assumption that the present invention can be applied to an IEEE 802.11 based wireless LAN (WLAN) system, the present invention will not be limited only to this. It will be understood that the present invention can be applied to diverse wireless systems capable of performing data transmission based on channel bonding by using the same method as presented herein.

## Claims

1. A method by a first station, STA (100), in a wireless local area network, WLAN, system comprising:
transmitting a physical protocol data unit, PPDU, comprising an enhanced directional multi gigabit, EDMG, header A field and a training, TRN, field to a second STA (150), wherein the EDMG header A field includes information on whether the PPDU is transmitted through a plurality of channels based on a channel bonding or a channel aggregation, wherein the TRN field which is appended to the end of the PPDU is differently configured based on the information included in the EDMG header A field; and
performing beamforming training procedure on the plurality of channels with the second STA (150),
wherein fields other than the TRN field in the PPDU are duplicated for the plurality of channels, and
wherein the TRN field is transmitted through the bonded channel based on the information included in the EDMG header A field.

2. The method of claim 1, wherein the PPDU is configured in an order of a legacy shot training field, L-STF, a legacy channel estimation, L-CE, field, a legacy header, L-Header, field, the EDMG header A field, a beam refinement protocol, BRP, frame, and the TRN field.

3. The method of claim 2, wherein the BRP frame comprises one of a sector identity, ID, field and a count DOWN, CDOWN, field based on whether a short sector sweep, SSW, frame is used in a previously performed sector level sweep, SLS, phase.

4. The method of claim 3, wherein the BRP frame comprises a CDOWN field, when the short SSW frame is used in the previously performed SLS phase, and
the BRP frame comprises a sector ID field, when the short SSW frame is not used in the previously performed SLS phase.

5. The method of claim 1, wherein the channel bonding comprises two to four channel bonding, when the PPDU is transmitted through the plurality of channels based on the channel bonding.

6. The method of claim 1, wherein the channel aggregation comprises two channel aggregation or four channel aggregation, when the PPDU is transmitted through the plurality of channels based on the channel aggregation.

7. The method of claim 1, wherein the PPDU does not comprise an EDMG-STF field, an EDMG-CE field, and an EDMG header-B field.

8. The method of claim 1, wherein the EDMG header A field comprises a 1-bit size indicator including information on whether the PPDU is transmitted through the plurality of channels based on the channel bonding or the channel aggregation.

9. The method of claim 8, wherein the 1-bit size indicator is a TRN aggregation subfield.

10. A method by a first station, STA (150), in a wireless local area network, WLAN, system comprising:
receiving a physical protocol data unit, PPDU, comprising an enhanced directional multi gigabit, EDMG, header A field and a training, TRN, field from a second STA (100), wherein the EDMG header A field includes information on whether the PPDU is transmitted through the plurality of channels based on a channel bonding or a channel aggregation, wherein the TRN field which is appended to the end of the PPDU is differently configured based on the information included in the EDMG header A field; and
performing beamforming training procedure on the plurality of channels with the second STA (100),
wherein fields other than the TRN field in the PPDU are duplicated for the plurality of channels, and
wherein the TRN field is transmitted through the bonded channel based on the information included in the EDMG header A field.

11. The method of claim 10, wherein the PPDU is configured in an order of a legacy shot training field, L-STF, a legacy channel estimation, L-CE, field, a legacy header, L-Header, field, the EDMG header A field, a beam refinement protocol, BRP, frame, and the TRN field.

12. The method of claim 11, wherein the BRP frame comprises one of a sector identity, ID, field and a count DOWN, CDOWN, field based on whether a short sector sweep, SSW, frame is used in a previously performed sector level sweep, SLS, phase.

13. The method of claim 12, wherein the BRP frame comprises a CDOWN field, when the short SSW frame is used in a previously performed SLS phase, and
the BRP frame comprises a sector ID field, when the short SSW frame is not used in the previously performed SLS phase.

14. The method of claim 10, wherein the channel bonding comprises two and four channel bonding, when the PPDU is transmitted through the plurality of channels based on the channel bonding.

15. A station device (100) in a wireless local area network, WLAN, system, the station device comprising:
a transceiver (130) having at least one radio frequency, RF, chain and configured to transmit and receive signals to and from another station device (150); and
a processor (110) connected to the transceiver to process signals transmitted and received to and from the other station device (150),
wherein the processor is configured to:
transmit a physical protocol data unit, PPDU, comprising an enhanced directional multi gigabit, EDMG, header A field and a training, TRN, field to the other STA device (150), wherein the EDMG header A field includes information on whether the PPDU is transmitted through the plurality of channels based on a channel bonding or a channel aggregation, wherein the TRN field which is appended to the end of the PPDU is differently configured based on the information included in the EDMG header A field; and
perform beamforming training procedure on the plurality of channels with the other STA device (150),
wherein fields other than the TRN field in the PPDU are duplicated for the plurality of channels, and
wherein the TRN field is transmitted through the bonded channel based on the information included in the EDMG header A field.

## Patentansprüche

1. Verfahren durch eine erste Station, STA (100), in einem System eines drahtlosen lokalen Netzes, WLAN, umfassend:
Senden einer Physical Protocol Data Unit, PPDU, die ein EDMG-Header-A-Feld (EDMG = Enhanced Directional Multi Gigabit) und ein TRN-Feld (TRN = Training) umfasst, an eine zweite STA (150), wobei das EDMG-Header-A-Feld Informationen darüber enthält, ob die PPDU basierend auf einer Kanalbündelung oder einer Kanalaggregation durch eine Vielzahl von Kanälen gesendet wird, wobei das TRN-Feld, das an das Ende der PPDU angehängt wird, basierend auf den im EDMG-Header-A-Feld enthaltenen Informationen unterschiedlich konfiguriert wird; und
Durchführen einer Beamforming-Training-Prozedur an der Vielzahl von Kanälen mit der zweiten STA (150),
wobei Felder mit Ausnahme des TRN-Felds in der PPDU für die Vielzahl von Kanälen dupliziert werden und
wobei das TRN-Feld basierend auf den im EDMG-Header-A-Feld enthaltenen Informationen durch den gebündelten Kanal gesendet wird.

2. Verfahren nach Anspruch 1, wobei die PPDU in der Reihenfolge L-STF-Feld (L-STF = Legacy Shot Training Field), L-CE-Feld (L-CE = Legacy Channel Estimation), L-Header-Feld (L-Header = Legacy Header), EDMG-Header-A-Feld, BRP-Rahmen (BRP = Beam Refinement Protocol) und TRN-Feld konfiguriert wird.

3. Verfahren nach Anspruch 2, wobei der BRP-Rahmen basierend darauf, ob in einer vorher durchgeführten SLS-Phase (SLS = Sector Level Sweep) ein Short-SSW-Rahmen (SSW = Sector Sweep) genutzt wird, ein Sector-ID-Feld (ID = Identity) oder ein CDOWN-Feld (CDOWN = Count DOWN) umfasst.

4. Verfahren nach Anspruch 3, wobei der BRP-Rahmen ein CDOWN-Feld umfasst, wenn in der vorher durchgeführten SLS-Phase der Short-SSW-Rahmen genutzt wird, und
der BRP-Rahmen ein Sector-ID-Feld umfasst, wenn in der vorher durchgeführten SLS-Phase der Short-SSW-Rahmen nicht genutzt wird.

5. Verfahren nach Anspruch 1, wobei die Kanalbündelung eine 2- bis 4-Kanalbündelung umfasst, wenn die PPDU basierend auf der Kanalbündelung durch die Vielzahl von Kanälen gesendet wird.

6. Verfahren nach Anspruch 1, wobei die Kanalaggregation eine 2-Kanalaggregation oder 4-Kanalaggregation umfasst, wenn die PPDU basierend auf der Kanalaggregation durch die Vielzahl von Kanälen gesendet wird.

7. Verfahren nach Anspruch 1, wobei die PPDU nicht ein EDMG-STF-Feld, ein EDMG-CE-Feld und ein EDMG-Header-B-Feld umfasst.

8. Verfahren nach Anspruch 1, wobei das EDMG-Header-A-Feld eine Anzeige mit einer Größe von 1 Bit umfasst, die Informationen darüber enthält, ob die PPDU basierend auf der Kanalbündelung oder der Kanalaggregation durch die Vielzahl von Kanälen gesendet wird.

9. Verfahren nach Anspruch 8, wobei die Anzeige mit einer Größe von 1 Bit ein TRN-Aggregation-Subfeld ist.

10. Verfahren durch eine erste Station, STA (150), in einem System eines drahtlosen lokalen Netzes, WLAN, umfassend:
Empfangen einer Physical Protocol Data Unit, PPDU, die ein EDMG-Header-A-Feld (EDMG = Enhanced Directional Multi Gigabit) und ein TRN-Feld (TRN = Training) umfasst, von einer zweiten STA (100), wobei das EDMG-Header-A-Feld Informationen darüber enthält, ob die PPDU basierend auf einer Kanalbündelung oder einer Kanalaggregation durch die Vielzahl von Kanälen gesendet wird, wobei das TRN-Feld, das an das Ende der PPDU angehängt wird, basierend auf den im EDMG-Header-A-Feld enthaltenen Informationen unterschiedlich konfiguriert wird; und
Durchführen einer Beamforming-Training-Prozedur an der Vielzahl von Kanälen mit der zweiten STA (100),
wobei Felder mit Ausnahme des TRN-Felds in der PPDU für die Vielzahl von Kanälen dupliziert werden und
wobei das TRN-Feld basierend auf den im EDMG-Header-A-Feld enthaltenen Informationen durch den gebündelten Kanal gesendet wird.

11. Verfahren nach Anspruch 10, wobei die PPDU in der Reihenfolge L-STF-Feld (L-STF = Legacy Shot Training Field), L-CE-Feld (L-CE = Legacy Channel Estimation), L-Header-Feld (L-Header = Legacy Header), EDMG-Header-A-Feld, BRP-Rahmen (BRP = Beam Refinement Protocol) und TRN-Feld konfiguriert wird.

12. Verfahren nach Anspruch 11, wobei der BRP-Rahmen basierend darauf, ob in einer vorher durchgeführten SLS-Phase (SLS = Sector Level Sweep) ein Short-SSW-Rahmen (SSW = Sector Sweep) genutzt wird, ein Sector-ID-Feld (ID = Identity) oder ein CDOWN-Feld (CDOWN = Count DOWN) umfasst.

13. Verfahren nach Anspruch 12, wobei der BRP-Rahmen ein CDOWN-Feld umfasst, wenn in einer vorher durchgeführten SLS-Phase der Short-SSW-Rahmen genutzt wird, und
der BRP-Rahmen ein Sector-ID-Feld umfasst, wenn in der vorher durchgeführten SLS-Phase der Short-SSW-Rahmen nicht genutzt wird.

14. Verfahren nach Anspruch 10, wobei die Kanalbündelung eine 2- und 4-Kanalbündelung umfasst, wenn die PPDU basierend auf der Kanalbündelung durch die Vielzahl von Kanälen gesendet wird.

15. Stationsgerät (100) in einem System eines drahtlosen lokalen Netzes, WLAN, wobei das Stationsgerät Folgendes umfasst:
einen Sender-Empfänger (130) mit mindestens einer HF-Kette (HF = Hochfrequenz), der konfiguriert ist, um Signale an ein anderes Stationsgerät (150) zu senden und Signale von dem anderen Stationsgerät zu empfangen; und
einen mit dem Sender-Empfänger verbundenen Prozessor (110) zum Verarbeiten von an das andere Stationsgerät (150) gesendeten und von dem anderen Stationsgerät empfangenen Signalen,
wobei der Prozessor für Folgendes konfiguriert ist:
Senden einer Physical Protocol Data Unit, PPDU, die ein EDMG-Header-A-Feld (EDMG = Enhanced Directional Multi Gigabit) und ein TRN-Feld (TRN = Training) umfasst, an das andere STA-Gerät (150), wobei das EDMG-Header-A-Feld Informationen darüber enthält, ob die PPDU basierend auf einer Kanalbündelung oder einer Kanalaggregation durch die Vielzahl von Kanälen gesendet wird, wobei das TRN-Feld, das an das Ende der PPDU angehängt wird, basierend auf den im EDMG-Header-A-Feld enthaltenen Informationen unterschiedlich konfiguriert wird; und
Durchführen einer Beamforming-Training-Prozedur an der Vielzahl von Kanälen mit dem anderen STA-Gerät (150),
wobei Felder mit Ausnahme des TRN-Felds in der PPDU für die Vielzahl von Kanälen dupliziert werden und
wobei das TRN-Feld basierend auf den im EDMG-Header-A-Feld enthaltenen Informationen durch den gebündelten Kanal gesendet wird.

## Revendications

1. Procédé par une première station, STA (100), dans un système de réseau local sans fil, WLAN, comprenant :
l'émission d'une unité de données de protocole physique, PPDU, comprenant un champ d'en-tête A multi gigabit directionnel amélioré, EDMG, et un champ d'apprentissage, TRN, vers une seconde STA (150), dans lequel le champ d'en-tête A EDMG comprend des informations indiquant si l'unité PPDU est émise par l'intermédiaire d'une pluralité de canaux sur la base d'une liaison de canaux ou d'une agrégation de canaux, dans lequel le champ TRN qui est annexé à la fin de la PPDU est configuré différemment sur la base des informations contenues dans le champ d'en-tête A EDMG ; et
l'exécution d'une procédure d'apprentissage de mise en forme de faisceau sur la pluralité de canaux au moyen de la seconde STA (150),
dans lequel des champs autres que le champ TRN dans la PPDU sont dupliqués pour la pluralité de canaux, et
dans lequel le champ TRN est émis par le canal lié sur la base des informations contenues dans le champ d'entête A EDMG.

2. Procédé selon la revendication 1, dans lequel la PPDU est configurée dans l'ordre d'un champ d'apprentissage de tir existant, L-STF, d'un champ d'estimation de canal existant, L-CE, d'un champ d'entête existant, L-Header, du champ d'en-tête A EDMG, d'une trame de protocole d'affinement de faisceau, BRP, et du champ TRN.

3. Procédé selon la revendication 2, dans lequel la trame BRP comprend l'un d'un champ d'identité de secteur, ID, et d'un champ de compte DOWN, CDOWN, selon qu'une trame de balayage de secteur courte, SSW, est ou non utilisée lors d'une phase de balayage de niveau de secteur, SLS, exécutée précédemment.

4. Procédé selon la revendication 3, dans lequel la trame BRP comprend un champ CDOWN, lorsque la trame SSW courte est utilisée lors de la phase SLS exécutée précédemment, et
la trame BRP comprend un champ ID de secteur, lorsque la trame SSW courte n'est pas utilisée lors de la phase SLS exécutée précédemment.

5. Procédé selon la revendication 1, dans lequel la liaison de canaux comprend une liaison de deux à quatre canaux, lorsque la PPDU est émise par la pluralité de canaux sur la base de la liaison de canaux.

6. Procédé selon la revendication 1, dans lequel l'agrégation de canaux comprend l'agrégation de deux canaux ou l'agrégation de quatre canaux, lorsque la PPDU est émise par l'intermédiaire de la pluralité de canaux sur la base de l'agrégation de canaux.

7. Procédé selon la revendication 1, dans lequel la PPDU ne comprend pas de champ EDMG-STF, de champ EDMG-CE, et de champ d'en-tête B EDMG.

8. Procédé selon la revendication 1, dans lequel le champ d'en-tête A EDMG comprend un indicateur de taille de 1 bit contenant des informations indiquant si la PPDU est émise par la pluralité de canaux sur la base de la liaison de canaux ou de l'agrégation de canaux.

9. Procédé selon la revendication 8, dans lequel l'indicateur de taille à 1 bit est un sous-champ d'agrégation TRN.

10. Procédé par une première station, STA (150), dans un système de réseau local sans fil, WLAN, comprenant :
la réception d'une unité de données de protocole physique, PPDU, comprenant un champ d'en-tête A multi gigabit directionnel amélioré, EDMG, et un champ d'apprentissage, TRN, en provenance d'une seconde STA (100), dans lequel le champ d'en-tête A EDMG comprend des informations indiquant si l'unité PPDU est émise par la pluralité de canaux sur la base d'une liaison de canaux ou d'une agrégation de canaux, dans lequel le champ TRN qui est annexé à la fin de la PPDU est configuré différemment sur la base des informations contenues dans le champ d'entête A EDMG ; et
l'exécution d'une procédure d'apprentissage de mise en forme de faisceau sur la pluralité de canaux au moyen de la seconde STA (100),
dans lequel des champs autres que le champ TRN dans la PPDU sont dupliqués pour la pluralité de canaux, et
dans lequel le champ TRN est émis par le canal lié sur la base des informations contenues dans le champ d'entête A EDMG.

11. Procédé selon la revendication 10, dans lequel la PPDU est configurée dans l'ordre d'un champ d'apprentissage de tir existant, L-STF, d'un champ d'estimation de canal existant, L-CE, d'un champ d'entête existant, L-Header, du champ d'en-tête A EDMG, d'une trame de protocole d'affinement de faisceau, BRP, et du champ TRN.

12. Procédé selon la revendication 11, dans lequel la trame BRP comprend l'un d'un champ d'identité de secteur, ID, et d'un champ de compte DOWN, CDOWN, selon qu'une trame de balayage de secteur courte, SSW, est ou non utilisée lors d'une phase de balayage de niveau de secteur, SLS, exécutée précédemment.

13. Procédé selon la revendication 12, dans lequel la trame BRP comprend un champ CDOWN, lorsque la trame SSW courte est utilisée lors d'une phase SLS exécutée précédemment, et
la trame BRP comprend un champ ID de secteur, lorsque la trame SSW courte n'est pas utilisée lors de la phase SLS exécutée précédemment.

14. Procédé selon la revendication 10, dans lequel la liaison de canaux comprend la liaison de deux et quatre canaux, lorsque la PPDU est émise par la pluralité de canaux sur la base de la liaison de canaux.

15. Dispositif de station (100) dans un système de réseau local sans fil, WLAN, le dispositif de station comprenant :
un émetteur-récepteur (130) comportant au moins une chaîne radiofréquence, RF, et configuré pour émettre et recevoir des signaux vers et depuis un autre dispositif de station (150) ; et
un processeur (110) connecté à l'émetteur-récepteur pour traiter des signaux émis et reçus depuis et depuis l'autre dispositif de station (150),
dans lequel le processeur est configuré pour :
émettre une unité de données de protocole physique, PPDU, comprenant un champ d'en-tête A multi gigabit directionnel amélioré, EDMG, et un champ d'apprentissage, TRN, vers l'autre dispositif STA (150), dans lequel le champ d'en-tête A EDMG comprend des informations indiquant si la PPDU est émise par la pluralité de canaux sur la base d'une liaison de canaux ou d'une agrégation de canaux, dans lequel le champ TRN qui est annexé à la fin de la PPDU est configuré différemment sur la base des informations contenues dans le champ d'en-tête A EDMG ; et
exécuter une procédure d'apprentissage de mise en forme de faisceau sur la pluralité de canaux au moyen de l'autre dispositif STA (150),
dans lequel des champs autres que le champ TRN dans la PPDU sont dupliqués pour la pluralité de canaux, et
dans lequel le champ TRN est émis par le canal lié sur la base des informations contenues dans le champ d'entête A EDMG.
